(19) Europäisches Patentamt
European Patent Office
Office européen des brevets

(11) EP 2 134 048 B1

(12) EUROPEAN PATENT SPECIFICATION

(45) Date of publication and mention
of the grant of the patent:
**24.08.2016 Bulletin 2016/34**

(51) Int Cl.:
*H04L 27/26* (2006.01)      *H04L 27/20* (2006.01)

(21) Application number: **09002855.6**

(22) Date of filing: **27.02.2009**

(54) **Carrier frequency error detection in a multicarrier receiver**

Trägerfrequenzfehlerdetektion in einem Mehrträgerempfänger

Détecteur d'erreur de fréquence de porteuse dans un recépteur multiporteur

(84) Designated Contracting States:
**DE GB IT SE**

(30) Priority: **11.06.2008 JP 2008152894**

(43) Date of publication of application:
**16.12.2009 Bulletin 2009/51**

(73) Proprietor: **Mitsubishi Electric Corporation**
**Chiyoda-ku**
**Tokyo 100-8310 (JP)**

(72) Inventors:
• **Maeno, Akiko**
**Tokyo 100-8310 (JP)**

• **Arita, Eiji**
**Tokyo 100-8310 (JP)**
• **Maeda, Naotoshi**
**Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
**GB-A- 2 364 221      JP-A- 2002 064 457**

## Description

BACKGROUND OF THE INVENTION

Field of the Invention

The present invention relates to an orthogonal frequency division multiplexing (OFDM) carrier frequency error detector, and more particularly to a carrier frequency error detector in digital terrestrial television broadcasting where a differential pilot carrier is defined, such as integrated services digital broadcasting-terrestrial (ISDB-T) or digital video broadcasting-terrestrial (DVB-T).

Description of the Background Art

As OFDM carrier frequency error detection methods, such as digital terrestrial television broadcasting, in which differential pilot carriers are set, there have been a method of detection using a guard interval (GI) correlation (autocorrelation of a second-half section of a symbol and a guard interval) utilizing the fact that a replica (copy) of a second half of an effective symbol period is in the GI in a time domain, and a method of detection using differential demodulation of pilot carriers in a frequency domain.

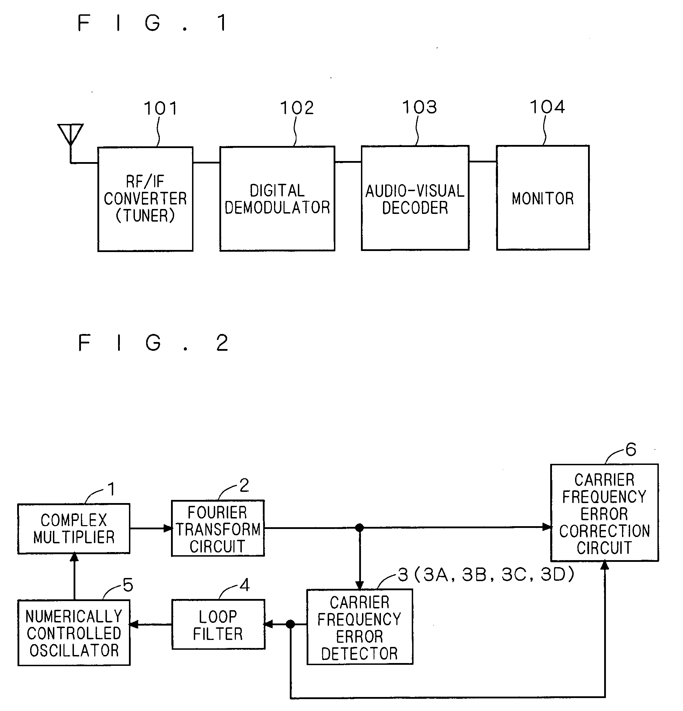

In the method of using a GI correlation that utilizes a guard interval in the time domain, a memory for at least a symbol length is needed. To correct carrier frequency errors in the time domain, common phase error (CPE) correction is needed, in which correction pilot carriers are differentially demodulated as correction of phase noise in the frequency domain, and the phases after the differential demodulation are integrated or averaged. Such examples are disclosed in Japanese Patent Laid-Open Nos. H9-321733 (FIG. 1) and H11-112460 (FIG. 1).

On the other hand, in the method of differentially demodulating pilot carriers in the frequency domain and detecting the phases after differential demodulation as carrier frequency errors, the pilot carriers are signals that have been subjected to differential binary phase shift keying (DBPSK) modulation. Therefore, for example, in the ISDB-T, regarding transmission and multiplexing configuration control (TMMC) signals, information fluctuates between $\pm\pi$ for each symbol, and auxiliary channel (AC) carriers fluctuate between $\pm\pi$ for each pilot carrier. Therefore, one problem with a phase detection circuit is that a phase can be generally detected only in a range of $\pm\pi/2$. For such a problem, refer to Japanese Patent Laid-Open No. 2004-304454 (FIG. 10) and Japanese Patent No. 3773388 (FIG. 1).

As described above, by the method of using a GI correlation in the time domain, a frequency error can be detected. However, an error occurs, e.g., in a multipath environment with reflected waves. In particular, to correct inter-carrier interference (ICI) caused by phase noise and Doppler shift, a carrier error needs to be detected in a wide range of the frequency domain.

Conventional carrier frequency error detection methods only convert results of differential demodulation into phases. Therefore, the range of frequency error detection has a limitation of $\pm\pi/2$ as described above. There is no reliability around $\pm\pi/2$, and the range that can be linearly used is $\pm\pi/4$. Regarding the error correction of a carrier frequency, error correction is possible even in a range exceeding $\pm\pi/2$ although detection characteristics are reversed. However, there has been a problem that it takes time until convergence.

There has been another problem that only a range of $\pm\pi/4$ or less, i.e., about $\pm1/8$ of the symbol frequency can be used for correction of inter-carrier interference caused by phase noise and Doppler shift.

JP 2002-064457 A is directed to an orthogonal frequency division multiplex signal demodulation device, in which both correlation calculation circuit and carrier frequency error calculation circuits receive input from a fast fourier transformation circuit via a differential detection circuit, wherein the correlation calculation circuits output feeds the carrier frequency correction circuit that corrects the frequency error for correcting carrier frequency, while the carrier frequency error calculation unit feeds a phase fluctuation correction circuit for correcting the phase fluctuation common to entire sub carriers of a reception signal.

SUMMARY OF THE INVENTION

An object of the present invention is to provide a carrier frequency error detector that can correctly detect a carrier frequency error, as a matter of course, and expand a linear area of a frequency error detection range to speed up a convergence of correction of an error of a carrier frequency and correct inter-carrier interference in a wide range.

An aspect of a carrier frequency error detector according to claim 1. The carrier frequency error detector described above is configured such that in response to first phase information obtained by differentially demodulating a pilot carrier and averaging the phase of phase information detected by differential demodulation in a phase averaging circuit and second phase information obtained by shifting the first phase information by [pi], each of first and second interpolation circuits corrects an amplitude of said pilot carrier based on said first and second phase information, using said pilot carrier and plurality of subcarriers positioned in the vicinity thereof, and outputs the corrected amplitude as first and second interpolation results respectively, and they are differentially demodulated, so that variations in phase are determined. Therefore, if the pilot carrier is interpolated at a phase different from the original phase, the phase is varied greatly, allowing the propriety of the phase to be determined. Information +-[pi] of DBPSK, which is a modulation scheme of pilot carriers, is invalidated, enabling a carrier frequency error to be detected in a range of $\pm\pi$.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram showing a schematic configuration of a digital television set;

FIG. 2 is a block diagram showing a schematic configuration of a carrier frequency reproducing circuit;

FIG. 3 is a block diagram showing a schematic configuration of a carrier frequency error detector in a first embodiment of the present invention;

FIG. 4 shows a phase rotation that appears in differentially demodulated pilot carriers;

FIG. 5 shows a phase rotation that appears in differentially demodulated pilot carriers;

FIG. 6 shows one example of carrier frequency error detection characteristics;

FIG. 7 is a flow chart illustrating an operation of a carrier frequency error detector in the first embodiment of the present invention;

FIG. 8 is a block diagram showing a configuration of an interpolation circuit;

FIG. 9 shows subcarrier interference curves for use in interpolation circuits;

FIG. 10 is a block diagram showing a configuration of a complex multiplier;

FIG. 11 shows a subcarrier without a frequency error;

FIG. 12 shows a subcarrier with a frequency error;

FIG. 13 shows results in a case where a correct interpolation coefficient is provided;

FIG. 14 shows results in a case where an incorrect interpolation coefficient is provided;

FIG. 15 shows configurations of phase variation detection circuits;

FIG. 16 shows an error detection curve by a carrier frequency error detector in the first embodiment of the present invention;

FIG. 17 is a block diagram showing a configuration of a carrier frequency error detector in a second embodiment of the present invention;

FIG. 18 shows detection characteristics of a phase conversion circuit;

FIG. 19 shows ununiformity of signal points after differential demodulation;

FIG. 20 shows ununiformity of angles of signal points after differential demodulation;

FIG. 21 is a flow chart for illustrating an operation of a carrier frequency error detector in the second embodiment of the present invention;

FIG. 22 is a block diagram showing a configuration of a carrier frequency error detector in a third embodiment of the present invention;

FIG. 23 is a block diagram showing a configuration of a carrier frequency error detector in a fourth embodiment of the present invention;

FIG. 24 is a timing chart simply showing an operation of the carrier frequency error detector in the fourth embodiment of the present invention;

FIG. 25 is a block diagram showing a configuration of a carrier frequency error detector in a fifth embodiment of the present invention;

FIG. 26 is a timing chart simply showing an operation of a carrier frequency error detector in the fifth embodiment of the present invention; and

FIG. 27 shows a configuration of a phase computing circuit.

DESCRIPTION OF THE PREFERRED EMBODIMENTS

FIG. 1 is a block diagram showing a schematic configuration of a digital television set. As shown in FIG. 1, a digital television set includes a radio frequency (RF)/intermediate frequency (IF) converter (tuner) 101 for converting RF signals received by an antenna to IF signals, a digital demodulator 102 for demodulating the IF signals to digital signals, an audio-visual decoder 103 for decoding the demodulated digital signals to image signals and audio signals, and a monitor 104 that enables the decoded audio signals and image signals to be visible and audible.

In the tuner 101, a vicinity of a carrier frequency is converted to an intermediate frequency or a baseband by multiplication as quasi-synchronous detection. However, an error is included in the intermediate frequency or the baseband. To remove the error, the digital demodulator 102 includes a carrier frequency reproducing circuit.

FIG. 2 is a block diagram showing a schematic configuration of a carrier frequency reproducing circuit. As shown in FIG. 2, the carrier frequency reproducing circuit includes a complex multiplier 1 that detects a transfer error and performing multiplication by a carrier reproduced in a numerically controlled oscillator 5, a Fourier transform circuit 2 that transforms OFDM signals in a time domain to those in a frequency domain, a carrier frequency error detector 3 (3A, 3B) that detects carrier frequency errors from pilot carrier signals among subcarrier signals converted in the frequency domain, a loop filter 4 of a carrier reproducing loop that limits a band of the error of the carrier frequency error detector 3 (3A, 3B) and performs integration, the numerically controlled oscillator 5 that generates a reproduced carrier depending on an output of the loop filter 4, and a frequency error correction circuit 6 that corrects and outputs inter-carrier interference (ICI) caused by phase noise and Doppler shift and phase rotation common to subcarriers using an output of the carrier frequency error detector 3 (3A, 3B).

The present invention relates to the carrier frequency error detector 3 (3A, 3B, 3C, 3D) that constitute this carrier frequency reproducing circuit, and embodiments thereof will be described below.

First Embodiment

<Device Configuration>

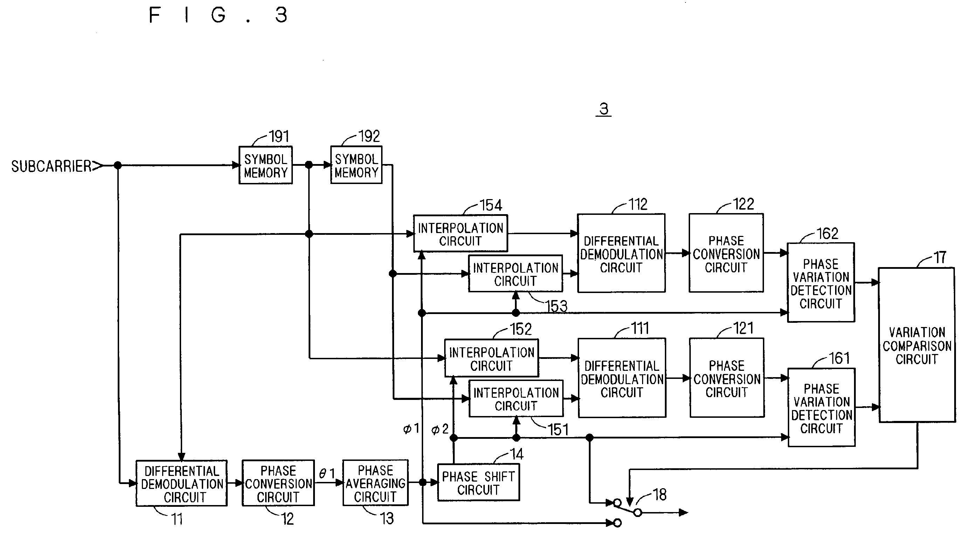

FIG. 3 is a block diagram showing a schematic configuration of the carrier frequency error detector 3 of a first embodiment in the present invention.

As shown in FIG. 3, the carrier frequency error detector 3 includes differential demodulation circuits 11, 111 and 112, phase conversion circuits 12, 121 and 122, a phase averaging circuit 13, a phase shift circuit 14, interpolation circuits 151, 152, 153 and 154, phase variation detection circuits 161 and 162, a variation comparison circuit 17, a switching circuit 18, and symbol memories 191 and 192 that store Fourier transformed subcarrier signals of one symbol.

The differential demodulation circuit 11 demodulates pilot signals among subcarrier signals of the current symbol provided from the Fourier transform circuit 2 (FIG. 2) with a difference from pilot signals among subcarrier signals of the previous symbol at the same frequency as that in the subcarrier signals of the current symbol. The phase conversion circuit 12 detects a phase of $\pm\pi$, e.g., by using ATAN (arctangent) from an output of the differential demodulation circuit 11.

The phase averaging circuit 13 averages phases of specified pilot carriers in one symbol output from the phase conversion circuit 12 to generate phase information, and the phase shift circuit 14 rotates the output of the phase averaging circuit 13 by 180 degrees ($\pi$).

The interpolation circuits 151 and 152 (second interpolation circuits) are circuits that interpolate pilot carriers according to inter-subcarrier interference curves in response to an output $\phi2$ of the phase shift circuit 14, and their respective outputs are provided to the differential demodulation circuit 111. The interpolation circuits 153 and 154 (first interpolation circuits) are circuits that interpolate pilot carriers according to the inter-subcarrier interference curves in response to an output $\phi1$ of the phase shift circuit 13, and their respective outputs are provided to the differential demodulation circuit 112. Note that pilot carriers of the previous symbol are input to the interpolation circuits 151 and 153, and pilot carriers of the current symbol are input to the interpolation circuits 152 and 154.

The differential demodulation circuit 111 receives the pilot carriers after interpolation of the previous symbol and those of the current symbol, which are output from the interpolation circuits 151 and 152, respectively, and differentially demodulates the pilot carriers and then provides the same to the phase conversion circuit 121 to accomplish phase conversion.

The differential demodulation circuit 112 receives the pilot carriers after interpolation of the previous symbol and those of the current symbol, which are output from the interpolation circuits 153 and 154, respectively, and differentially demodulates them and then provides them to the phase conversion circuit 122 to accomplish phase conversion.

Signals converted to phases in the phase conversion circuits 121 and 122 are provided to the phase variation detection circuits 161 and 162, respectively, which detect phase variations of pilot carriers.

The phase variation detection circuit 161 is a circuit to measure a phase variation of an output of the phase conversion circuit 121 with respect to the output ($\phi2$) of the phase shift circuit 14, and the measurement result is provided to the variation comparison circuit 17.

The phase variation detection circuit 162 is a circuit to measure a phase variation of an output of the phase conversion circuit 122 with respect to the output ($\phi1$) of the phase averaging circuit 13, and the measurement result is provided to the variation comparison circuit 17.

The variation comparison circuit 17 compares outputs of the phase variation detection circuits 161 and 162, and an output of the variation comparison circuit 17 is used for switching control for the switching circuit 18.

The switching circuit 18 receives the outputs $\phi1$ and $\phi2$ of the phase averaging circuit 13 and the phase shift circuit 14, and outputs one of the outputs as a carrier frequency error signal by the switching control of the variation comparison circuit 17.

Next, pilot signals in a digital broadcast system and a conventional detection method of a carrier frequency error using pilot carriers are briefly described.

In ISDB-T, there exist two kinds, TMCC and AC, of pilot signals that carry data through differential BPSK (binary phase shift keying) modulations, and there also exist SP (scattered pilot) and CP (continual pilot) of only one subcarrier (for details, refer to ARIB STD-B31, "Transmission System for Digital Terrestrial Television Broadcasting").

Differential pilots are used in the present invention, and therefore only TMCC pilot carriers and AC pilot carriers are to be processed. Note that differential BPSK carriers called transmission parameters signalling (TPS) pilot carriers exist in the DVB-T method, but the description thereof is not given.

The TMCC pilot carriers can transfer one bit data in one symbol by a plurality of subcarriers, and the AC pilot carriers can transmit information by each subcarrier.

Both TMMC signals and AC signals are modulated by differential BPSK signals. Regarding these signals, a plurality of signals are transmitted at the same frequency in the frequency domain. On a reception side, the subcarriers of the previous symbol and the subcarriers of the current symbol that are at the same frequency are differentially demodulated after Fourier transform, so that the TMCC signals and the AC signals are demodulated.

Here, in a case of a presence of a carrier frequency error, signals transmitted, e.g., at zero degrees and at 180 degrees have a phase difference between the symbols. This phase difference is common to all subcarriers, and therefore a phase error appears in a result of differential demodulation of a pilot carrier.

For example, in mode 3 of the TSDB-T, the subcarrier spacing is 1 KHz. Supposing that there is an error in a carrier frequency of 100 Hz, the error appears as a phase rotation of $\pi/4$ in the demodulated pilot carrier.

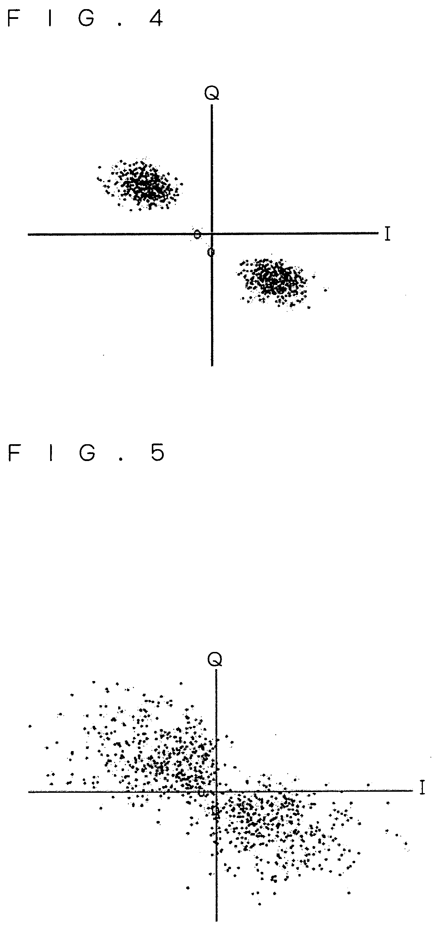

One example of this is shown in FIGS. 4 and 5. FIG. 4 shows demodulation results of a frequency error of 100 Hz in a case of mode 3 and a guard interval length of 1/4 (expressed as a rate per symbol length). FIG. 5 is a constellation diagram showing demodulation results of a frequency error of 300 Hz. A Q axis is a vertical axis and an I axis is a horizontal axis.

As shown in FIGS. 4 and 5, demodulation results appear with a substantial concentration in $-\pi/4$ and $3\pi/4$. This is because the TMCC signal has phase information of $\pi$ for each symbol, and the AC signal has phase information of $\pi$ for each subcarrier. Accordingly, demodulating of pilot carriers results in the presence of two phases with a distance of $\pi$ therebetween.

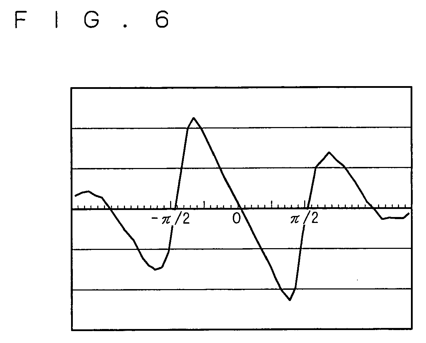

To obtain a carrier frequency error from differential demodulation results as shown in FIGS. 4 and 5, both the TMCC signal and the AC signal cannot be used in their original states as frequency error information because of the presence of phase information of 0 or $\pi$. Therefore, for example, a second quadrant on the constellation diagram is changed to a fourth quadrant, and a third quadrant to a first quadrant, that is, conversion of $\pm\pi/2$ with zero as a center is performed to detect a frequency error. Frequency error detection characteristics at this point are shown in FIG. 6.

In FIG. 6, the horizontal axis indicates the phase. Fig. 6 shows that in frequency errors in a range of $\pi/4$ to $-\pi/4$ with a phase of zero as the center, the characteristics are linear to allow the errors to be detected. However, Fig. 6 also shows that frequency errors beyond the range cannot be detected correctly.

<Device Operation>

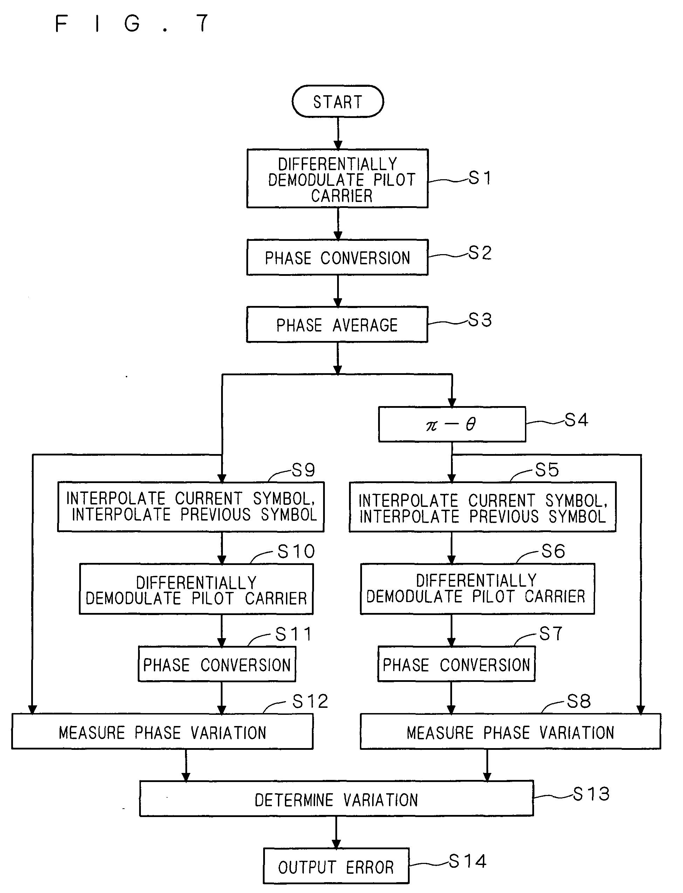

With the carrier frequency error detector 3 in the present invention, frequency error detection characteristics can be improved. With reference to FIGS. 7 to 17, the operation of the carrier frequency error detector 3 is described, while referring to FIG. 3.

In step S1 of a flow chart shown in FIG. 7, differential demodulation of a pilot carrier of the previous symbol and a pilot carrier of the current symbol are first performed in the differential demodulation circuit 11. In this case, the pilot carrier of the previous symbol is included in the output of symbol memory 191, and the pilot carrier of the current symbol is included in a signal before entering the symbol memory 191.

Next, the differentially demodulated signal is converted into a phase in a range of $\pm\pi$ around zero degrees, e.g., by using ATAN (arctangent) in the phase conversion circuit 12 (step S2). For purposes of the description that follows, this phase is referred to as "$\theta1$".

For the differentially demodulated pilot carrier that has been converted into the phase $\theta1$, all the pilot signals of the symbol are accumulatively integrated in the phase averaging circuit 13, and then are divided by the number of pilots to determine the phase average (step S3). The primary purpose of the process of determining the average is to cancel noise. Therefore, the average processing may be eliminated, and the number of averages may also be reduced. For purposes of the description that follows, the output of the phase averaging circuit 13 is referred to as an "output $\phi1$". Note that the period from the beginning of differential demodulation in the differential demodulation circuit 11 to determination of an output in the phase averaging circuit 13 corresponds to one symbol period, and the period after the determination of the output in the phase averaging circuit 13 to determination of an output of the variation comparison circuit 17 corresponds to the next symbol period.

Next, the phase of the output $\phi1$ of the phase averaging circuit 13 is shifted (represented as "$\pi-\theta$") by 180 degrees (i.e., $\pi$) in the phase shift circuit 14 (step S4). This is because the results of differential demodulation of pilot carriers exist at two positions having a phase difference of $\pi$. The output of the phase shift circuit 14 is referred to as an "output $\phi2$".

The output $\phi2$ of the phase shift circuit 14 is provided to the interpolation circuits 151 and 152, and the output $\phi1$ of the phase averaging circuit 13 is provided to the interpolation circuits 153 and 154.

The output of the symbol memory 192 is received in the interpolation circuits 151 and 152. In this case, a pilot carrier of the previous symbol is included in the output of the symbol memory 192, and the pilot carrier is interpolated from subcarrier signals positioned in the vicinity thereof (steps S5 and S9). The output of the symbol memory 191 is received in the interpolation circuits 152 and 154. In this case, a pilot carrier of the current symbol is included in the output of the symbol memory 191, and the pilot carrier is interpolated from subcarrier signals positioned in the vicinity thereof (steps S5 and S9).

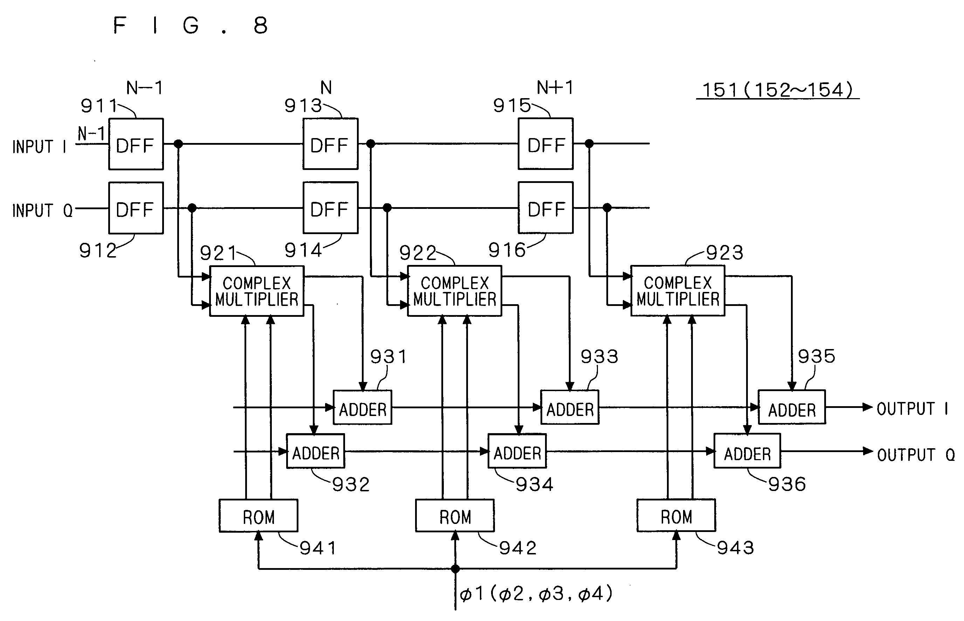

Here, configurations of the interpolation circuits 151 to 154 are described with reference to Fig. 8. Fig. 8 is a block diagram showing a schematic configuration of the interpolation circuit 151 (the interpolation circuits 152 to 154 have the same configuration as the interpolation circuit 151).

When a time domain signal is transformed to a frequency domain signal by a fast Fourier transform (FFT) in the Fourier transform circuit 2, computation is performed per symbol. The signal after FFT is formed in a bunch of IQ signals of a plurality of subcarriers. The bunch of IQ signals are output in an order from a subcarrier at a lower frequency for convenience of data processing.

In the interpolation circuit 151 shown in FIG. 8, subcarriers after Fourier transform that are output in order of ascending frequency from the Fourier transform circuit 2 are received by a group of DFFs (D-type flip-flops) that each flip-flop at a timing of a clock. Note that FIG. 8 shows a case where when an Nth subcarrier is a pilot carrier, the pilot carrier is interpolated by using an (N-1)th subcarrier and an (N+1)th subcarrier in front of and behind the Nth subcarrier.

The group of DFFs has DFFs 911, 913 and 915 connected in series on an I input line and DFFs 912, 914 and 916 connected in series on a Q input line. Outputs of the DFFs 911 and 912 are also provided to a complex multiplier 921, and are complex-multiplied by output signals of a read only memory (ROM) 941, which will be described later. Outputs of the DFFs 913 and 914 are also provided to a complex multiplier 922, and are complex-multiplied by output signals of a ROM 942, which will be described later. Outputs of the DFFs 915 and 916 are also provided to a complex multiplier 923, and are complex-multiplied by output signals of a ROM 943, which will be described later.

Inphase signals (I signals) and quadrature signals (Q signals) resulting from complex-multiplication in the complex multiplier 921 are input to adders 931 and 932, respectively, and are added to I signals and Q signals after complex-multiplication of the adjacent subcarrier. I signals and Q signals resulting from complex-multiplication in the complex multiplier 922 are input to adders 933 and 934, respectively, and are added to I signals and Q signals after complex-multiplication of the adjacent subcarrier. I signals and Q signals resulting from complex-multiplication in the complex multiplier 923 are input to adders 935 and 936, respectively, and are added to I signals and Q signals after complex-multiplication of the adjacent subcarrier.

The ROMs 941 to 943 are ROMs that output a part of inter-subcarrier interference curves in a phase range determined in advance depending on an output of the phase averaging circuit 13 or the phase shift circuit 14 shown in FIG. 3.

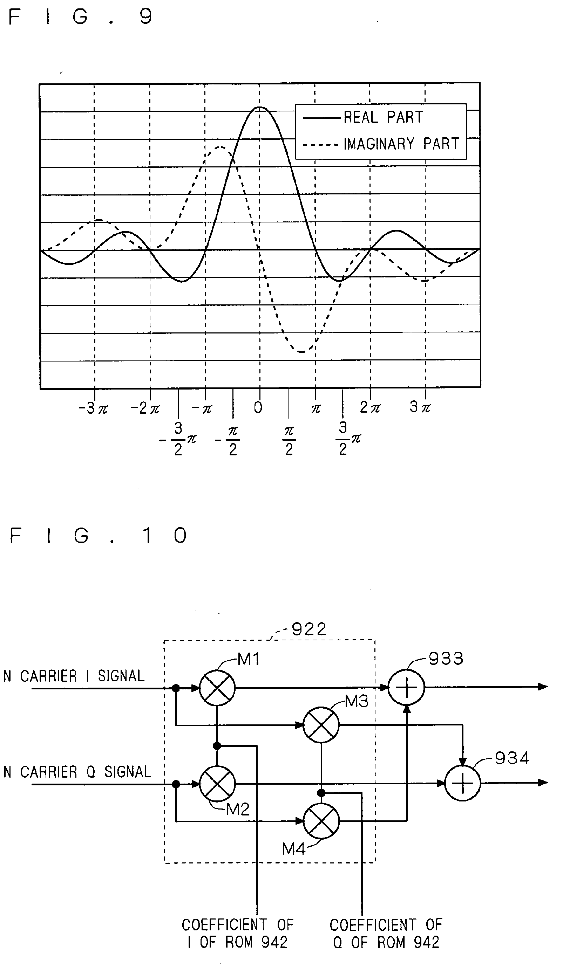

That is, a part of the inter-subcarrier interference curves for the (N-1)th subcarrier defined in the DFFs 911 and 912 is stored in advance in the ROM 941. With the inter-subcarrier interference curves shown in FIG. 9 taken as an example, coefficients from $-3\pi/2$ to $-\pi/2$ are stored. A part of the inter-subcarrier interference curves for the Nth subcarrier defined in the DFFs 913 and 914 is stored in advance in the ROM 942. With the inter-subcarrier interference curves shown in FIG. 9 taken as an example, coefficients from $-\pi/2$ to $\pi/2$ are stored. A part of the inter-subcarrier interference curves for the (N+1)th subcarrier defined in the DFFs 915 and 916 is stored in advance in the ROM 943. With the inter-subcarrier interference curves shown in FIG. 9 taken as an example, coefficients from $\pi/2$ to $3\pi/2$ are stored.

Accordingly, in the ROM 942, an interpolation coefficient of a pilot carrier corresponding to the output $\phi2$ is output. The output $\phi2$ is obtained such that the phase of phase information detected by differential demodulation is averaged in the phase averaging circuit 13 to determine the output $\phi1$, and the phase of the output $\phi1$ is further shifted by $\pi$ in the phase shift circuit 14. In the ROMs 941 and 943, interpolation coefficients corresponding to values determined by shifting the output $\phi2$ by $\pm\pi$ are output. Then, in the complex multipliers 921 to 923, I signals and Q signals of the (N-1)th subcarrier, the Nth subcarrier and the (N+1)th subcarrier are multiplexed by interpolation coefficients output from the ROMs 941 to 943, and are added for each of the I axis and the Q axis in the adders 931 to 936.

Note that the interpolation circuits 153 and 154 are configured such that the output $\phi1$ resulting from the phase averaging in the phase averaging circuit 13 of the phase information detected by differential demodulation is provided to the ROMs 941 to 943 and interpolation coefficients corresponding to the output $\phi1$ are output.

FIG. 10 shows a configuration of the complex multiplier 922, as an example.

As shown in FIG. 10, the complex multiplier 922 includes a multiplier M1 that multiplies the I signal of the Nth subcarrier by the interpolation coefficient for the I signal output from the ROM 942, a multiplier M2 that multiplies the Q signal of the Nth subcarrier by the interpolation coefficient for the I signal output from the ROM 942, a multiplier M3 that multiplies the I signal of the Nth subcarrier by the interpolation coefficient for the Q signal output from the ROM 942, and a multiplier M4 that multiplies the Q signal of the Nth subcarrier by the interpolation coefficient for the Q signal output from the ROM 942. An output of the multiplier M1 and an output of the multiplier M4 are provided to the adder 933 and are added, and an output of the multiplier M2 and an output of the multiplier M3 are provided to the adder 934 and are added.

Concepts of the foregoing processing is described below.

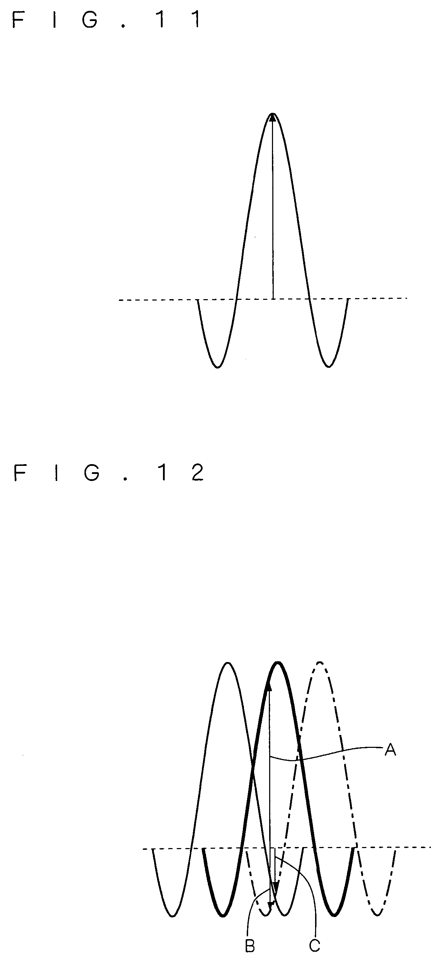

FIG. 11 shows a subcarrier without a frequency error. This subcarrier is not affected by other subcarriers, and has no change in amplitude and phase. On the other hand, FIG. 12 shows a subcarrier with a frequency error. This subcarrier receives an influence of the adjacent subcarriers by inter-subcarrier interference, thereby appearing as a composite signal with the adjacent subcarriers in an FFT output. That is, a center subcarrier has a shifted phase and a reduced amplitude as shown by an arrow A. This is because its original amplitude is combined with amplitudes in a reverse direction of the adjacent subcarriers indicated by arrows B and C.

Here, interference curves from the adjacent subcarriers have been found from characteristics of FFT. Therefore, an interpolation coefficient of the adjacent subcarrier and an interpolation coefficient of the pilot carrier are acquired from the interference curves, data of the adjacent subcarrier and the pilot carrier is multiplied by the acquired coefficients, and the results are added together, thereby performing correction. A correct value in the case without interference can thus be reproduced.

However, since a differentially modulated signal is used as a known signal, information obtained from one symbol has uncertainties corresponding to $\pi$. Therefore, a configuration is adopted in which interpolations are performed by using a signal that is shifted by $\pi$ with respect to a phase fluctuation angle determined by differential demodulation and a signal that is not shifted, and one result having a less variation is employed.

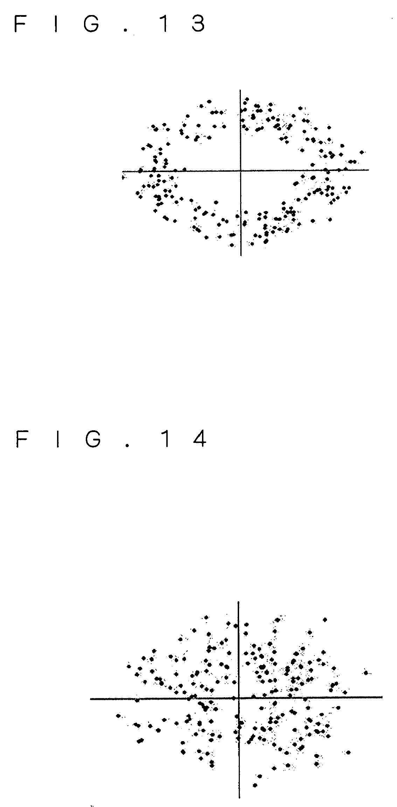

FIGS. 13 and 14 each show one example of results of the foregoing interpolation process. For example, when a frequency error of $\pi/4$ remains, a result of a case where an interpolation is performed correctly at $\pi/4$ is shown in FIG. 13, and a result of a case where an interpolation is performed at $-3\pi/4$ by a phase shift of $\pi$ is shown in FIG. 14. As shown in FIG. 13, when a correct interpolation coefficient is given, outputs of an interpolation circuit converge around an amplitude circle of the pilot carrier. However, as shown in FIG. 14, when an incorrect interpolation coefficient is given, inter-carrier interference occurs more strongly, and therefore outputs do not converge around the amplitude circle of the pilot carrier, causing each pilot carrier to diverge.

Based on the foregoing principles, information of $\pi$ held by the pilot carrier is canceled and a correct phase error is determined in the present invention.

Here, description is returned to the flow chart shown in FIG. 7.

After pilot carriers of the current symbol are interpolated in the interpolation circuits 152 and 154 and pilot carriers of the previous symbol are interpolated in the interpolation circuits 151 and 153, the pilot carriers after interpolation output from the interpolation circuits 151 and 152 are differentially demodulated in the differential demodulation circuit 111 (step S6), and thereafter conversion into a phase (phase information after interpolation) is performed in the phase conversion circuit 121 (step S7). For the subcarrier converted into the phase, a variation with respect to the output $\phi2$, i.e., a phase $\phi2$, of the phase shift circuit 14 is measured in the phase variation detection circuit 161 (step S8).

The pilot carriers after interpolation output from the interpolation circuits 153 and 154 are differentially demodulated in the differential demodulation circuit 112 (step S10), and thereafter conversion into a phase (phase information after interpolation) is performed in the phase conversion circuit 122 (step S11). For the subcarrier converted into the phase, a variation with respect to the output $\phi1$, i.e., a phase $\phi1$, of the phase shift circuit 13 is measured in the phase variation detection circuit 162 (step S12).

As shown in FIG. 13, if an interpolation is performed correctly, the phase can reproduce the phase of the original pilot carrier. However, as shown in FIG. 14, if the interpolation is performed incorrectly, the phase diverges.

After variations are measured in the phase variation detection circuits 161 and 162, the variations are compared and determined in the variation comparison circuit 17 (step S13), enabling a phase error to be decided from the phase obtained by a correct interpolation.

For example, if a frequency error of $\pi/4$ remains, TMCC carriers appear at two positions of $-\pi/4$ and $3\pi/4$ as shown in FIG. 4. However, variations are measured in the phase variation detection circuits 161 and 162, and a phase (e.g., $\pi/4$) at which the interpolation is performed so as to make the variation the smallest is determined as a correct phase. Therefore, $\pi/4$ is the correct phase even in a case where the TMCC carrier appears at a position of $3\pi/4$.

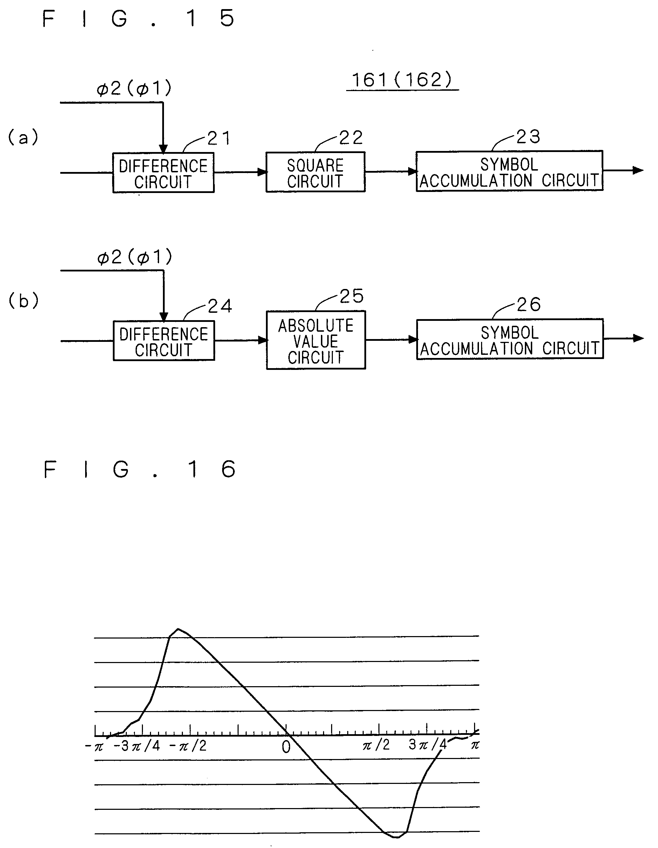

Here, an example of the configuration of the phase variation detection circuit 161, which is the same as that of the phase variation detection circuit 162, is shown in (a) and (b) portions of FIG. 15.

(a) portion of FIG. 15 shows a circuit to determine a variation by using dispersion. In this circuit, a difference from the phase $\phi2$ ($\phi1$) is determined for each pilot carrier in a difference circuit 21, the result is squared in a square circuit 22, thereafter, the values are accumulated for pilot carriers between symbols in a symbol accumulation circuit 23, and dispersion is calculated from the result, thereby measuring a variation.

(b) portion of FIG. 15 shows a circuit to determine a variation by using deviation. In this circuit, a difference from the phase $\phi2$ ($\phi1$) is determined for each pilot carrier in a difference circuit 24, and the absolute value is determined in an absolute value circuit 25. This is single information, and therefore is the same as deviation. The values are accumulated for pilot carriers between symbols in a symbol accumulation circuit 26, and dispersion is calculated from the result. Thus, the circuit measures a variation. With such a configuration, a variation can be expressed numerically with ease.

In the variation comparison circuit 17, a switch 18 is turned on and off to control so that a phase for an interpolation coefficient given to the interpolation circuit that has been determined to have a less variation, that is, one of $\phi1$ and $\phi2$ is output as a carrier frequency error signal (step S14).

<Effects>

As described above, pilot carriers are differentially demodulated, and a phase average is determined for phase information detected by differential demodulation in the phase averaging circuit 13, thereby outputting a signal $\phi1$. In response to the signal $\phi1$, pilot carriers are interpolated using an interpolation coefficient based on the inter-carrier interference curves in the interpolation circuits 153 and 154. In response to a signal $\phi2$, whose phase is shifted by $\pi$ from that of the signal $\phi1$, pilot carriers are interpolated using an interpolation coefficient based on the inter-carrier interference curves in the interpolation circuits 151 and 152. Thus, the phase converges only if an interpolation is performed with a correct phase, whereas the phase diverges if an interpolation is performed with an incorrect phase. Therefore, the carrier frequency error can be detected correctly.

Here, frequency error detection characteristics of the carrier frequency error detector 3 are shown in FIG. 16. In FIG. 16, the horizontal axis indicates the phase, and it is shown that a range covering the vicinity of $\pm3\pi/4$ with a phase of zero as the center can be linearly detected. Accordingly, the linear area of a frequency error detection range is enlarged. This enables the convergence of correction of a carrier frequency error to be speeded up and the inter-carrier interference to be corrected in a wide range.

As shown in FIG. 8, the interpolation circuit 151 (152 to 154) for interpolating a pilot carrier can be achieved with a filter having several taps. In the conventional art, a long tap length is required to remove inter-carrier interference. In the present invention, however, an interpolation is used for comparing convergence with divergence, and therefore a long tap length is unnecessary. Removal of inter-carrier interference is advantageously achieved with a short tap length.

The symbol memories 191 and 192 each accumulate all subcarrier data of one symbol that has been Fourier transformed, and thus subcarrier signals of the previous symbol and the current symbol can be held with reliability.

Second Embodiment

<Device Configuration>

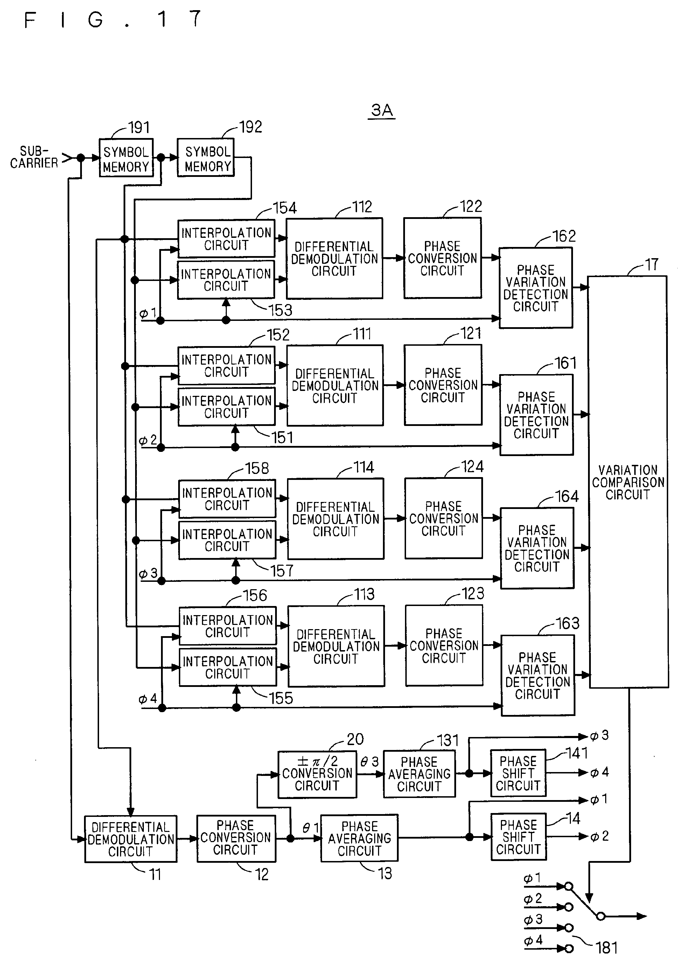

FIG. 17 is a block diagram showing a schematic configuration of a carrier frequency error detector 3A of a second embodiment in the present invention. Note that the same components as those shown in FIG. 3 are designated by the same reference numerals, and overlapping descriptions are not given.

As shown in FIG. 17, the carrier frequency error detector 3A includes, in addition to the configuration of the carrier frequency error detector 3, a $\pm\pi/2$ conversion circuit 20 that converts the phase $\phi1$, which is obtained by converting the output of the differential demodulation circuit 11 in the phase conversion circuit 12, to a phase in a range of $\pm\pi/2$, a phase averaging circuit 131 that averages the phase of a specified pilot carrier in one symbol output from the $\pm\pi/2$ conversion circuit 20 and outputs the averaged phase as phase information ($\phi3$), and a phase shift circuit 141 that shifts the phase of the output $\phi3$ of the phase averaging circuit 131 by 180 degrees (i.e., $\pi$) and outputs the shifted phase as a phase $\phi4$.

The carrier frequency error detector 3A further includes interpolation circuits 155, 156, 157 and 158, differential demodulation circuits 113 and 114, phase conversion circuits 123 and 124, and phase variation detection circuits 163 and 164.

The interpolation circuits 155 and 156 (fourth interpolation circuits) are circuits that interpolate pilot carriers according to inter-subcarrier interference curves in response to the output $\phi4$ of the phase shift circuit 141, and their respective outputs are provided to the differential demodulation circuit 113. The interpolation circuits 157 and 158 (third interpolation circuits) are circuits that interpolate pilot carriers according to the inter-subcarrier interference curves in response to the output $\phi3$ of the phase shift circuit 131, and their respective outputs are provided to the differential demodulation circuit 114. Note that pilot carriers of the previous symbol are input to the interpolation circuits 155 and 156, and pilot carriers of the current symbol are input to the interpolation circuits 157 and 158.

The differential demodulation circuit 113 receives the pilot carriers after interpolation of the previous symbol and those of the current symbol, which are output from the interpolation circuits 155 and 156, respectively, and differentially demodulates the pilot carriers and then provides the same to the phase conversion circuit 123 to accomplish phase conversion.

The differential demodulation circuit 114 receives the pilot carriers after interpolation of the previous symbol and those of the current symbol, which are output from the interpolation circuits 157 and 158, respectively, and differentially demodulates the pilot carriers and then provides the same to the phase conversion circuit 124 to accomplish phase conversion.

Signals (phase information after interpolation) converted to phases in the phase conversion circuits 123 and 124 are provided to the phase variation detection circuits 163 and 164, respectively, which detect phase variations of the pilot carriers.

The phase variation detection circuit 163 is a circuit to measure a phase variation of the output of the phase conversion circuit 123 with respect to the output $\phi4$ of the phase shift circuit 141, and the measurement result is provided to the variation comparison circuit 17.

The phase variation detection circuit 164 is a circuit to measure a phase variation of the output of the phase conversion circuit 124 with respect to the output $\phi3$ of the phase averaging circuit 131, and the measurement result is provided to the variation comparison circuit 17.

The variation comparison circuit 17 compares outputs of the phase variation detection circuits 161 to 164, and an output of the variation comparison circuit 17 is used for switching control for a switching circuit 181.

The switching circuit 181 receives the respective outputs $\phi1$ to $\phi4$ of the phase averaging circuit 13, the phase shift circuit 14, the phase averaging circuit 131 and the phase shift circuit 141, and outputs one of the outputs as a carrier frequency error signal by the switching control of the variation comparison circuit 17.

\<Device Operation\>

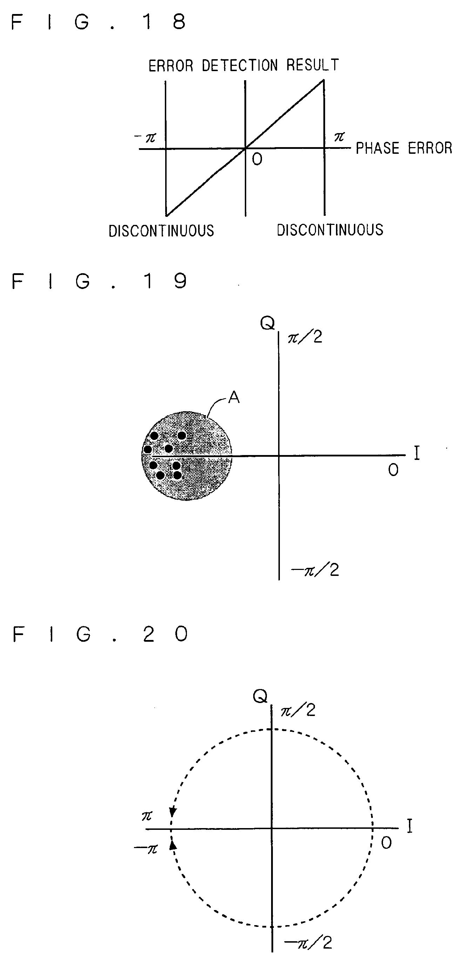

With reference to FIGS. 18 to 21, the operation of the carrier frequency error detector 3A is described.

FIG. 18 shows detection characteristics of the phase conversion circuit 12 (the phase conversion circuit 121 to 124 have the same detection characteristics as the phase conversion circuit 12), and the horizontal axis indicates the phase error and the vertical axis indicates the error detection result.

Due to the differential demodulation, outputs of the phase conversion circuit 12 are detected in a range of $\pm 7\pi$. Here, as shown in FIG. 18, if detection is performed with a phase of zero as the center, phase error detection results of signal points around $\pi$ or $-\pi$ are discontinuous. It is shown that a large error occurs.

FIGS. 19 and 20 each shows a constellation diagram where a Q axis is the vertical axis and an I axis is the horizontal axis. FIG. 19 shows an example where signal points are distributed not uniformly (a region A in the drawing), and FIG. 20 shows that phases are around or $-\pi$.

For example, upon determining the phase average of 10 pilot signals, if differentially demodulated result is accidentally distorted toward + or -, errors are up to $2\pi/10$. For example, if differentially demodulated result is in the vicinity of $\pi$ (or $-\pi$), the detection result extends not only in the vicinity of $\pi$ but also on the $-\pi$ side. In a case of integrating this between symbols to determine the average, for example, if, as the result of differential demodulation of 10 pilot carriers, 4 demodulation points are on the $\pi$ side, and 6 demodulation points are on the $-\pi$ side, the average is $-2\pi/10$. In the reverse case, the average is $2\pi/10$. Since demodulation of a pilot carrier is differential demodulation, a frequency error may be in the vicinity of zero if the result of differential demodulation is plus. Therefore, it can be said that the above error is very large.

Therefore, if the result of differential demodulation is around $\pi$ or $-\pi$, the phase is replaced so as to be in the vicinity of zero, thereby canceling an error due to characteristics of the phase conversion circuit 12.

For this purpose, the result of differential demodulation is converted in the $\pm \pi/2$ conversion circuit 20.

The $\pm \pi/2$ conversion circuit 20 operates as follows. That is, conversion is performed so that an output $\theta 3$ of the $\pm \pi/2$ conversion circuit 20 with respect to an output $\theta 1$ of the phase converter 12 is defined as expressed below.

$$\theta 1 \geq \pi/2 : \theta 3 = \theta 1 - \pi$$

$$\theta 1 \leq -\pi/2 : \theta 3 = \theta 1 + \pi$$

$$-\pi/2 < \theta 1 < \pi/2 : \theta 3 = \theta 1$$

Conversion in this way causes a signal having a phase in the vicinity of $\pm \pi$ to be converted to a signal having a phase in the vicinity of zero. Then, the phase is averaged in the phase averaging circuit 131.

Using a phase $\phi 3$ determined by averaging the output $\theta 3$ of the $\pm \pi/2$ conversion circuit 20 in the phase averaging circuit 131 and a phase $\phi 4$ determined by shifting the phase $\phi 3$ by 180 degrees in the phase shift circuit 141, interpolations are applied to pilot carriers of the previous symbol and the current symbol in the interpolation circuits 155 to 158, and a carrier frequency error is determined based on a phase variation after the differential demodulation.

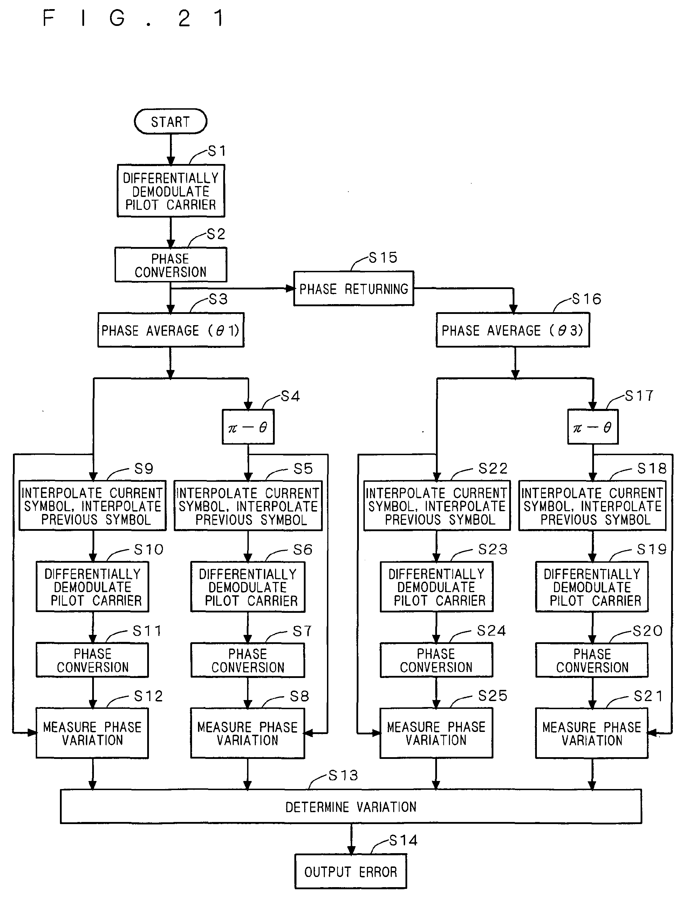

The foregoing operation is further described with reference to a flow chart shown in FIG. 21, while referring to FIG. 17.

In step S1 of the flow chart shown in FIG. 21, differential demodulation of a pilot carrier of the previous symbol and a pilot carrier of the current symbol are first performed in the differential demodulation circuits 11. In this case, the pilot carrier of the previous symbol is included in the output of symbol memory 191, and the pilot carrier of the current symbol is included in a signal before entering the symbol memory 191.

Next, the differentially demodulated signal is converted into a phase $\theta 1$ in a range of $\pm \pi$ around zero degrees, e.g., by using ATAN (arctangent) in the phase conversion circuit 12 (step S2).

For the differentially demodulated pilot carrier that has been converted to the phase $\theta 1$, all the pilot signals of the symbol are accumulatively integrated in the phase averaging circuit 13, and then are divided by the number of pilots to determine the phase average (step S3).

Next, the phase of the output $\phi 1$ of the phase averaging circuit 13 is shifted (represented as "$\pi$-$\theta$") by 180 degrees (i.e., $\pi$) in the phase shift circuit 14 (step S4).

The output $\phi 2$ of the phase shift circuit 14 is provided to the interpolation circuits 151 and 152, and the output $\phi 1$ of the phase averaging circuit 13 is provided to the interpolation circuits 153 and 154.

The output of the symbol memory 192 is received in the interpolation circuits 151 and 152. In this case, the pilot carrier of the previous symbol is included in the output of the symbol memory 192, and this pilot carrier is interpolated from subcarrier signals positioned in the vicinity thereof (steps S5 and S9). The output of the symbol memory 191 is received in the interpolation circuits 152 and 154. In this case, the pilot carrier of the current symbol is included in the output of the symbol memory 191, and this pilot carrier is interpolated from subcarrier signals positioned in the vicinity thereof (steps S5 and S9).

After pilot carriers of the current symbol are interpolated in the interpolation circuits 152 and 154 and pilot carriers of the previous symbol are interpolated in the interpolation circuits 151 and 153, the pilot carrier after interpolation output from each of the interpolation circuits 151 and 152 is differentially demodulated in the differential demodulation circuit 111 (step S6), and thereafter conversion to a phase is performed in the phase conversion circuit 121 (step S7). For the subcarrier converted to the phase, a phase variation with respect to the output $\phi2$, i.e., the phase $\phi2$, of the phase shift circuit 14 is measured in the phase variation detection circuit 161 (step S8).

The pilot carrier after interpolation output from each of the interpolation circuits 153 and 154 is differentially demodulated in the differential demodulation circuit 112 (step S10), and thereafter conversion into a phase is performed in the phase conversion circuit 122 (step S11). For the subcarrier converted into the phase, a phase variation with respect to the output $\phi1$, i.e., the phase $\phi1$, of the phase averaging circuit 13 is measured in the phase variation detection circuit 162 (step S12).

After variations are measured in the phase variation detection circuits 161 and 162, the variations are compared and determined in the variation comparison circuit 17 (step S13), enabling a phase error to be decided from the phase obtained by a correct interpolation.

For the phase $\theta1$ obtained by phase conversion in the phase conversion circuit 12, conversion is performed in the $\pm\pi/2$ conversion circuit 20, as described earlier, thus obtaining a phase $\theta3$. This is referred to as a "phase returning" process (step S15).

For the differentially demodulated pilot carrier that has been converted to the phase $\theta3$, all the pilot signals of the symbol are accumulatively integrated in the phase averaging circuit 131, and then are divided by the number of pilots to determine the phase average (step S17).

Next, the phase of the output $\phi3$ of the phase averaging circuit 131 is shifted (represented as "$\pi-\theta$") by 180 degrees (i.e., $\pi$) in the phase shift circuit 141 (step S4).

The output $\phi4$ of the phase shift circuit 141 is provided to the interpolation circuits 155 and 156, and the output $\phi3$ of the phase averaging circuit 131 is provided to the interpolation circuits 157 and 158.

The output of the symbol memory 192 is received in the interpolation circuits 155 and 157. In this case, the pilot carrier of the previous symbol is included in the output of the symbol memory 192, and this pilot carrier is interpolated from subcarrier signals positioned in the vicinity thereof (steps S18 and S22). The output of the symbol memory 191 is received in the interpolation circuits 156 and 158. In this case, the pilot carrier of the current symbol is included in the output of the symbol memory 191, and this pilot carrier is interpolated from subcarrier signals positioned in the vicinity thereof (steps S18 and S22).

After the pilot carrier of the current symbol is interpolated in the interpolation circuits 156 and 158 and the pilot carrier of the previous symbol is interpolated in the interpolation circuits 155 and 157, the pilot carrier after interpolation output from each of the interpolation circuits 155 and 156 is differentially demodulated in the differential demodulation circuit 113 (step S19), and thereafter conversion to a phase is performed in the phase conversion circuit 123 (step S20). For the subcarrier converted to the phase, a phase variation with respect to the output $\phi4$, i.e., the phase $\phi4$, of the phase shift circuit 141 is measured in the phase variation detection circuit 163 (step S21).

The pilot carrier after interpolation output from each of the interpolation circuits 157 and 158 is differentially demodulated in the differential demodulation circuit 114 (step S23), and thereafter conversion to a phase is performed in the phase conversion circuit 124 (step S24). For the subcarrier converted to the phase, a phase variation with respect to the output $\phi3$, i.e., the phase $\phi3$, of the phase shift circuit 131 is measured in the phase variation detection circuit 164 (step S25).

After variations are measured in the phase variation detection circuits 163 and 164, the variations are compared and determined in the variation comparison circuit 17 (step S13), enabling a phase error to be decided from the phase obtained by a correct interpolation.

In the variation comparison circuit 17, the switch 181 is turned on and off to control so that the phase for an interpolation coefficient given to the interpolation circuit that has been determined to have the minimum variation, that is, one of $\phi1$ to $\phi4$ is output as a carrier frequency error signal (step S14).

<Effects>

As described above, in the carrier frequency error detector 3A, the following effect is achieved in addition to an effect of the carrier frequency error detector 3 of the first embodiment. With the phase returning process in the $\pm\pi/2$ conversion circuit 20, the phase of a point of $\pm\pi$, which is a discontinuous point generated due to detection characteristics, can be correctly detected upon the conversion to a phase in the phase conversion circuit 12 after the differential demodulation. In particular, a carrier frequency error in the vicinity of a phase of zero can be detected with high accuracy.

Third Embodiment

<Device Configuration>

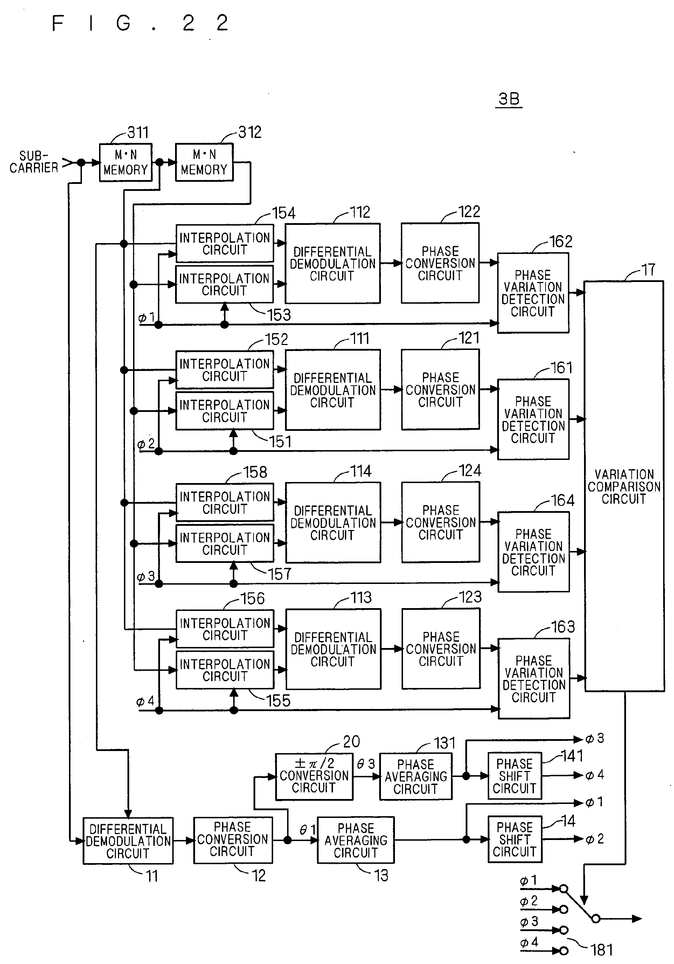

FIG. 22 is a block diagram showing a schematic configuration of a carrier frequency error detector 3B in a third embodiment of the present invention. Note that the same components as those in the carrier frequency error detector 3A shown in FIG. 17 are designated by the same reference numerals, and overlapping descriptions are not given.

As shown in FIG. 22, the carrier frequency error detector 3B includes, instead of the symbol memories 191 and 192, M·N memories 311 and 312 having addresses the number of which is determined by multiplying the number M of pilot carriers and the number N of taps of an interpolation circuit together.

<Device Operation>

The operation is next described. Basically, signals used in the present invention are only pilot carriers. Signals around pilot carriers are required in order that the pilot carriers are interpolated in the interpolation circuits 151 to 158. However, the interpolation circuits 151 to 158 are short-tap filters, and therefore only a small amount of memory capacity is required. Thus, using the M·N memories 311 and 312, which have the memory capacity determined by multiplying the number M of pilot carriers and the number N of taps of an interpolation circuit together, as symbol memories, is a characteristic of the carrier frequency error detector 3B.

For example, the number of TMCC pilot carriers that are differentially modulated in ISDB-T is 52 in the maximum mode 3 (mode 3), and the number of AC pilot carriers is 104. The total number of the pilot carriers is 156. Note that this number of pilot carriers means the number of pilot carriers that can be used both for a differential modulation segment and for a synchronous modulation segment. Accordingly, in a case of using a symbol memory, addresses for the number of effective carriers, i.e., 5617 are required. In the M·N memories 311 and 312, however, 156xN addresses are required, e.g., 1092 addresses are required even when using a 7·tap interpolation circuit, thus enabling the required memory capacity to be greatly reduced.

<Effects>

As described above, in the carrier frequency error detector 3B, the memory capacity for storing carrier signals is reduced to the minimum capacity required for interpolation processing, enabling the circuit size to be reduced. Even in such a case, the detection characteristics of a carrier frequency error are not affected, allowing the same detection accuracy as that in the carrier frequency error detector 3A of the second embodiment to be achieved.

Fourth Embodiment

<Device Configuration>

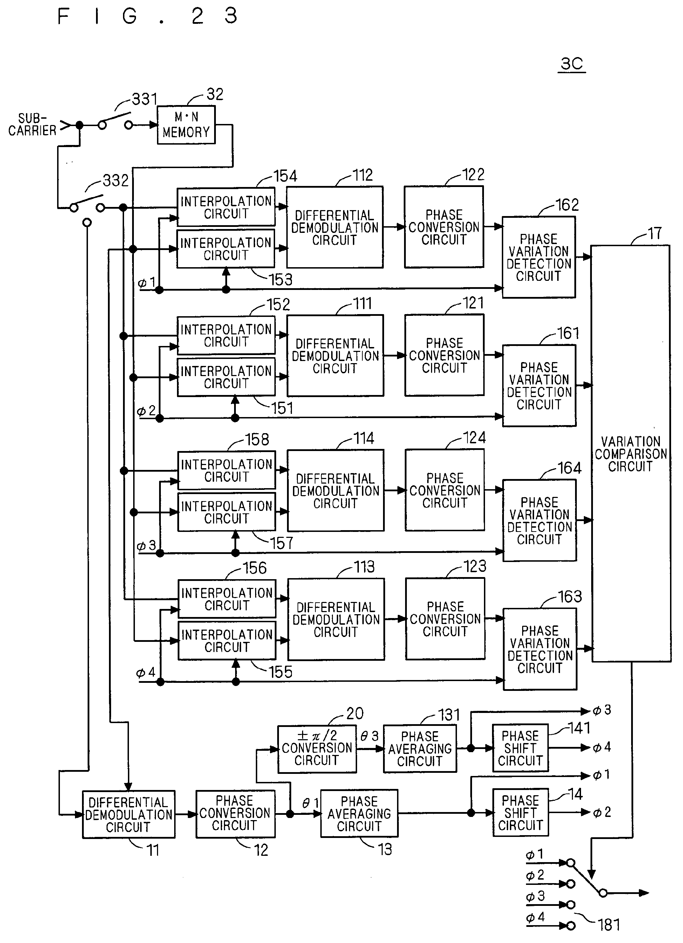

FIG. 23 is a block diagram showing a schematic configuration of a carrier frequency error detector 3C in a fourth embodiment of the present invention. Note that the same components as those in the carrier frequency error detector 3A shown in FIG. 17 are designated by the same reference numerals, and overlapping descriptions are not given.

As shown in FIG. 23, the carrier frequency error detector 3C includes, instead of the symbol memories 191 and 192, an M·N memory 32 having addresses the number of which is determined by multiplying the number M of pilot carriers and the number N of taps of an interpolation circuit together. A switch 331 for selecting whether or not to provide a Fourier transformed subcarrier signal to the M·N memory 32 is connected to an input section of the M·N memory 32. A switch 332 for selecting whether to provide a Fourier transformed subcarrier signal to interpolation circuits 152, 154, 156 and 158 or to the differential demodulation circuit 11 is also provided. The switches 331 and 332 constitute a selection circuit. Note that outputs of the M·N memory 32 are configured to be provided to the interpolation circuit 151, 153, 155 and 157 and the differential demodulation circuit 11.

<Device Operation>

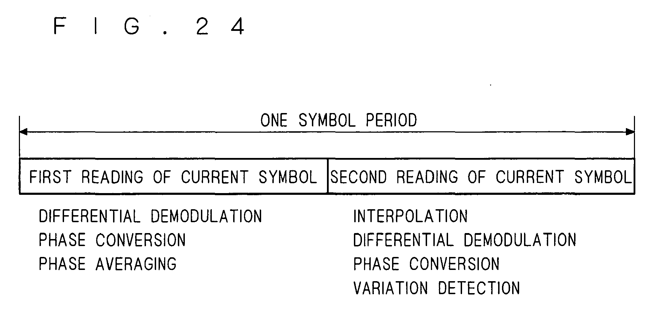

The operation of the carrier frequency error detector 3C is next described with reference to a timing chart shown in FIG. 24, while referring to FIG. 23.

A Fourier transform output from the Fourier transform circuit 2 (FIG. 2) is set, e.g., in ISDB-T such that one symbol is read for about 1 ms. This is a sufficiently slow signal from the viewpoint of the circuit design. The carrier frequency error detector 3C is characterized by employing a configuration in which control is performed using this setting so as to increase the speed for reading of a Fourier transform output. As a result, the output is read a plurality of times within one symbol period. This reduces the capacity of a memory for storing carrier signals.

FIG. 24 is a timing chart simply showing an operation of the carrier frequency error detector 3C. One symbol period is divided into two time zones. In a first time zone, a first reading of a carrier signal of the current symbol is performed; in a second time zone, a second reading of a carrier signal of the current symbol is performed.

Firstly, to perform steps S1 to S4 and S15 to S17 shown in FIG. 21, the first reading of a carrier signal of the current symbol is performed in the first time zone. At this point, the switch 331 is turned off, the switch 332 is connected to the differential demodulation circuit 11, and a carrier signal of the current symbol and a carrier signal of the previous symbol stored in the M·N memory 32 are provided to the differential demodulation circuit 11.

Next, to perform steps S5 to S14 and S18 to S25 shown in FIG. 21, the second reading of a carrier signal of the current symbol is performed in the second time zone. At this point, the switch 332 is connected to the interpolation circuits 152, 154, 156 and 158, to which carrier signals of the current symbol are provided, and carrier signals of the previous symbol stored in the M·N memory 32 are provided to the interpolation circuits 151, 153, 155 and 157. Note that, by turning on of the switch 331, carrier signals of the current symbol are provided to the M-N memory 32, and overwriting is performed for processing of the next symbol.

<Effects>

As described above, the carrier frequency error detector 3C is configured to read a Fourier transform output two times in one symbol period, allowing only one memory for storing carrier signals to be required. This can reduce the circuit size. Even in this case, the detection characteristics of a carrier frequency error are not affected, allowing the same detection accuracy as that in the carrier frequency error detector 3A of the second embodiment to be achieved.

<Modification>

In the above description, the example in which a Fourier transform output is read two times in one symbol period is given. However, a further increase of the reading speed enables the number of reading to be increased.

That is, steps S1 to S4 and S15 to S17 shown in FIG. 21 need to be completed in one reading time. However, steps S5 to S8, steps S9 to S12, steps S18 to S21 and steps S22 to S25 can each be completed within the individual reading time using carrier signals of the current symbol read in the individual reading time.

In this case, a Fourier transform output is read five times during one symbol period. As a result, each interpolation process becomes a serial process. One pair of interpolation circuits for the current symbol and the previous symbol are sufficient for the process. The number of interpolation circuits is reduced to one fourth, allowing the circuit size to be further reduced.

In the foregoing case, the differential demodulation circuit 11 and the phase conversion circuit 12 can also be used as the differential demodulation circuits 111 to 114 and the phase conversion circuits 121 to 124, allowing the circuit size to be still further reduced.

The detector may be configured such that steps S5 to S8 and steps S9 to S12 are performed in parallel so as to be completed within one reading time, and steps S18 to S21 and steps S22 to S25 are also performed in parallel so as to be completed within one reading time. In this case, a Fourier transform output is read three times during one symbol period. One pair of interpolation circuits for the current symbol and the previous symbol for steps S5 to S8 and steps S9 to S12 and one pair of interpolation circuits for the current symbol and the previous symbol for steps S18 to S21 and steps S22 to S25 are sufficient for the process. The number of interpolation circuits is reduced to half, contributing to reduction of the circuit size.

Fifth Embodiment

<Device Configuration>

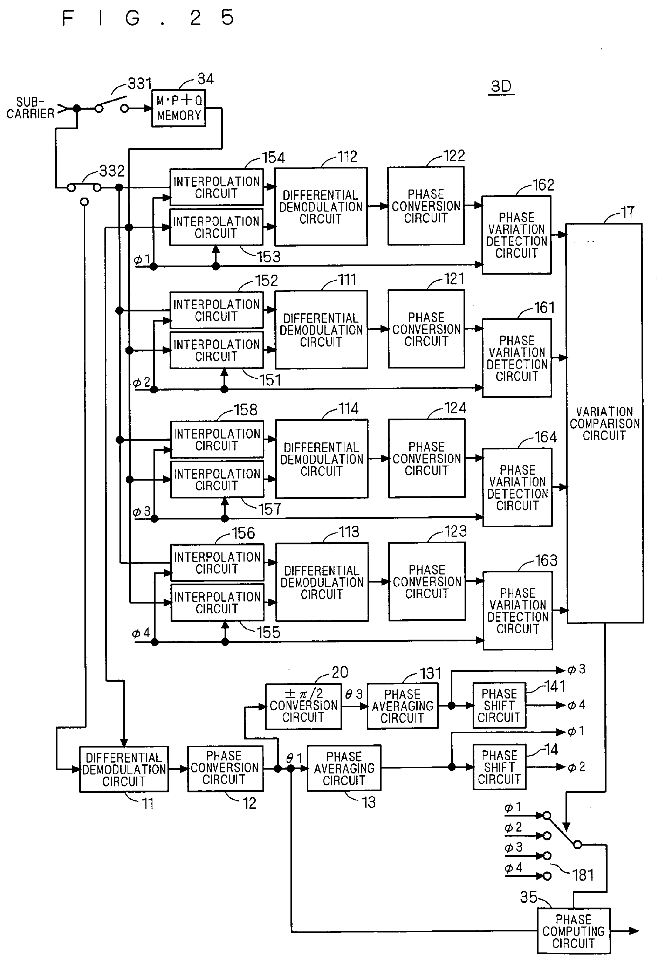

FIG. 25 is a block diagram showing a schematic configuration of a carrier frequency error detector 3D of a fifth embodiment in the present invention. Note that the same components as those in the carrier frequency error detector 3C shown in FIG. 23 are designated by the same reference numerals, and overlapping descriptions are not given.

As shown in FIG. 25, the carrier frequency error detector 3D includes, instead of the M·N memory 32, an M·P+Q memory 34 having addresses the number (M·P+Q) of which is determined by multiplying the number M (52 in mode 3) of pilot carriers of TMCC and the number P of taps of an interpolation circuit together and adding the total value of the number of pilot carriers of TMCC and the number of AC pilot carriers to the multiplication result. The output of switch 181 is configured such that it is output through a phase computing circuit 35 that determines a phase for each pilot carrier.

<Device Operation>

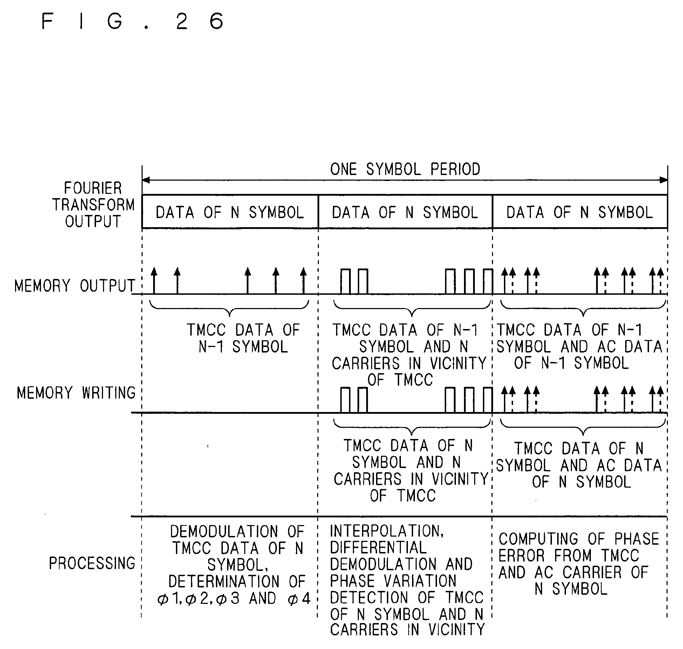

The operation of the carrier frequency error detector 3D is next described with reference to a timing chart shown in FIG. 26, while referring to FIG. 25.

A Fourier transform output from the Fourier transform circuit 2 (FIG. 2) is set, e.g., in ISDB-T such that one symbol is read for about 1 ms. This is a sufficiently slow signal from the viewpoint of the circuit design. The carrier frequency error detector 3D is characterized by employing a configuration in which control is performed using this setting so as to increase the speed for reading of a Fourier transform output so that the output is read a plurality of times within one symbol period, and only a specific pilot carrier is used until the first phase determination and all carriers are computed upon output. This reduces the capacity of a memory for storing carrier signals.

FIG. 26 is a timing chart simply showing an operation of the carrier frequency error detector 3D. One symbol period is divided into three time zones. In a first time zone, in order to perform steps S1 to S4 and S15 to S17 shown in FIG. 21 to calculate the phases $\phi 1$ to $\phi 4$ for a pilot carrier (first specific carrier) of TMCC, the first reading of carrier signals of the current symbol (referred to as an "N symbol") is performed from the Fourier transform circuit 2 (FIG. 2).

At this point, the switch 331 is turned off, the switch 332 is connected to the differential demodulation circuit 11, and carrier signals of the N symbol and pilot carriers of TMCC of the previous symbol (referred to as an "N-1 symbol") stored in the M·P+Q memory 34 are provided to the differential demodulation circuit 11.

In a second time zone that follows, steps S5 to S14 and S18 to S25 are performed using the calculated phases φ1 to φ4. In this case, pilot carriers of TMCC of the N symbol and N carrier signals around each pilot carrier are used for the interpolation process. The second reading of carrier signals of the N symbol is performed from the Fourier transform circuit 2 (FIG. 2), and pilot carriers of TMCC of the N-1 symbol and N carrier signals around each pilot carrier are read from the M·P+Q memory 34.

At this point, the switch 332 is connected to the interpolation circuits 152, 154, 156 and 158, to which carrier signals of the N symbol are provided. Pilot carriers of TMCC of the N-1 symbol and N carrier signals around each pilot carrier held in the M·P+Q memory 34 are provided to the interpolation circuits 151, 153, 155 and 157. Note that, by turning on of the switch 331, pilot carriers of TMCC of the N symbol and N carrier signals around each pilot carrier are provided to the M·P+Q memory 34, and overwriting is performed for processing of the next symbol.

Here, pilot carriers of TMCC and N carrier signals around each pilot carrier can be held in a memory having addresses the number of which is determined by multiplying the number M of pilot carriers of TMCC by the number P of taps of an interpolation circuit. That is, pilot carriers are input to the center tap and carriers other than the pilot carriers, i.e., N carriers in the vicinity are input in taps on both sides of the center tap in an interpolation circuit, and therefore the required memory capacity can be determined by multiplication of M·P.

In the process of the second time zone, one of the phases φ1 to φ4 is determined as a phase error φ through step S14 shown in FIG. 21. In a third time zone, phase computation of a signal θ after differential demodulation in the differential demodulation circuit 11 and phase conversion in the phase conversion circuit 12 and the phase error φ is performed for pilot carriers of TMMC and AC pilot carriers (second specific carriers) in the phase computing circuit 35.

That is, in the third time zone, the switch 332 is connected to the differential demodulation circuit 11. Carrier signals of the N symbol and pilot carriers of TMMC and AC pilot carriers of the N-1 symbol held in the M·P+Q memory 34 are provided to the differential demodulation circuit 11, so that differential demodulation is performed.

As described above, pilot carriers of TMMC and AC pilot carriers of the N-1 symbol are used in the third time zone. Also, the M·P+Q memory 34 requires addresses the number of which is equal to a total value Q of the number of pilot carriers of TMCC and the number of AC pilot carriers. Therefore, the memory capacity having addresses the number of which is equal to M·P+Q is required.

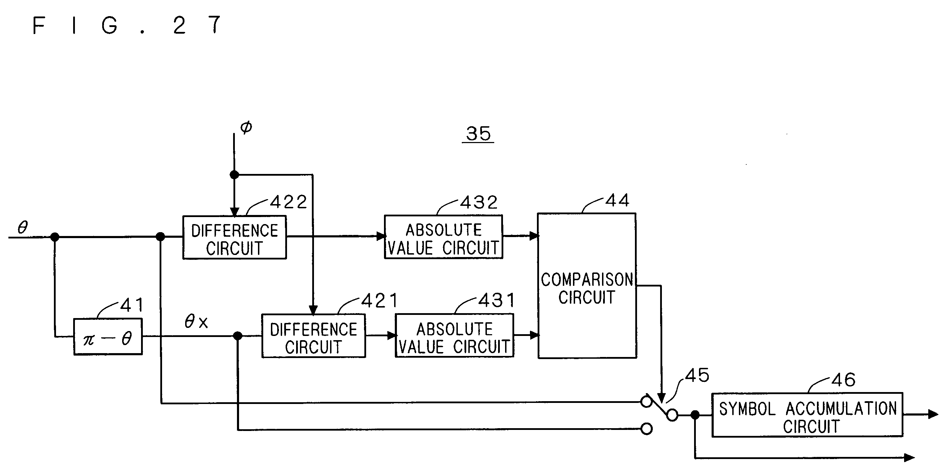

A configuration of the phase computing circuit 35 is shown in FIG. 27. As shown in FIG. 27, the phase computing circuit 35 includes a difference circuit 422 that calculates a difference from the phase error φ for the output θ of the phase conversion circuit 12, an absolute value circuit 432 that takes the absolute value of an output of the difference circuit 422, a phase shift circuit 41 that shifts the phase of the output θ of the phase conversion circuit 12 by π to obtain a phase θx after shifting, a difference circuit 421 that calculates a difference from the phase error φ for an output of the phase shift circuit 41, an absolute value circuit 431 that takes the absolute value of an output of the difference circuit 421, and a comparison circuit 44 that compares outputs of the absolute value circuits 431 and 432 and selects a smaller one. The output θ of the phase conversion circuit 12 and the phase θx after shifting, which is obtained by shifting the phase of the output θ by π, are connected to a switch 45. The switch 45 is configured to be controlled so as to select a smaller one based on a comparison result in the comparison circuit 44. The switch 45 outputs a phase error as an output of the carrier frequency error detector 3D, and an output of the switch 45 is provided to a symbol accumulation circuit 46, allowing the output to be accumulated between symbols.

As described above, the carrier frequency error detector 3D is configured to read a Fourier transform output three times in one symbol period, allowing only one memory for storing carrier signals to be required. This can reduce the circuit size. Even in this case, the detection characteristics of a carrier frequency error are not affected, allowing the same detection accuracy as that in the carrier frequency error detector 3A of the second embodiment to be achieved.

As described in the modification of the fourth embodiment, the number of reading a Fourier transform output in one symbol period may be further increased, allowing an interpolation circuit to be shared. This enables the number of interpolation circuits to be reduced to one fourth or to half. The differential demodulation circuit 11 and the phase conversion circuit 12 can also be used as the differential demodulation circuits 111 to 114 and the phase conversion circuits 121 to 124, allowing the circuit size to be further reduced.

While the invention has been shown and described in detail, the foregoing description is in all aspects illustrative and not restrictive. It is therefore understood that numerous modifications and variations can be devised without departing from the scope of the claims.

## Claims

1. A carrier frequency error detector, included in a demodulation device for demodulating an OFDM signal, for detecting a carrier frequency error using a differentially modulated pilot carrier among subcarriers that are converted to a frequency domain signal by Fourier transform, the carrier frequency error detector comprising:

    a differential demodulation circuit (11) that differentially demodulates said pilot carrier;
    a phase conversion circuit (12) that performs phase conversion of an output of said differential demodulation circuit to acquire a phase θ1, after demodulation of said pilot carrier;

a phase averaging circuit (13) that accumulatively integrates said phase after demodulation in one symbol, thereafter performs division by a number of pilots to acquire a phase average, and outputs the phase average as first phase information, Φ1;

a phase shift circuit (14) that receives said first phase information, and shifts said first phase information by 180 degrees to calculate second phase information, Φ2 ;

first interpolation circuits (153, 154) that, for each of the previous symbol and the current symbol, correct an amplitude of said pilot carrier based on said first phase information, using said pilot carrier and subcarriers in front and behind thereof, and output the corrected amplitude as a first interpolation result;

second interpolation circuits (151, 152) that, for each of the previous symbol and the current symbol, correct an amplitude of said pilot carrier based on said second phase information, using said pilot carrier and subcarriers in front and behind thereof, and output the corrected amplitude as a second interpolation result;

a first differential demodulation circuit (112) that, for each of the previous symbol and the current symbol, differentially demodulates said first interpolation result output from said first interpolation circuit;

a first phase conversion circuit (122) that converts a phase of an output of said first differential demodulation circuit to acquire first phase information after interpolation;

a second differential demodulation circuit (111) that, for each of the previous symbol and the current symbol, differentially demodulates said second interpolation result output from said second interpolation circuit;

a second phase conversion circuit (121) that converts a phase of an output of said second differential demodulation circuit to acquire second phase information after interpolation;

a first phase variation detection circuit (162) that collects said first phase information and said first phase information after interpolation for one symbol period, measures a variation of said first phase information after interpolation with respect to said first phase information, and outputs first phase variation information;

a second phase variation detection circuit (161) that collects said second phase information and said second phase information after interpolation for one symbol period, measures a variation of said second phase information after interpolation with respect to said second phase information, and outputs second phase variation information; and

a variation comparison circuit (17) that receives and compares said first and second phase variation information,

wherein one having a less variation of said first and second phase information is detected as a phase error, and
wherein:

said first interpolation circuits and said second interpolation circuits, each derive an interpolation coefficient corresponding to said first phase information and said second phase information respectively for said pilot carrier and subcarriers in front and behind thereof from an inter-carrier interference curve determined in advance, multiply said pilot carrier and said subcarriers by the interpolation coefficient, and add multiplication results, thereby correcting an amplitude of said pilot carrier, and output the corrected amplitude as a first interpolation result and a second interpolation result respectively.

2. The carrier frequency error detector according to claim 1, further comprising:

a phase conversion circuit (20) that receives said phase after demodulation output from said phase conversion circuit, and when said phase after demodulation is beyond $\pm\pi/2$, adds and subtracts $\pm n$ to perform conversion into a phase within $\pm\pi/2$, and outputs the phase as a phase (θ3) after conversion;

a first phase averaging circuit (131) that receives said phase after conversion, accumulatively integrates said phase after conversion in one symbol, thereafter performs a division by a number of pilots to acquire a phase average, and outputs the phase average as third phase information (φ3) ;

a first phase shift circuit (141) that receives said third phase information, and shifts said third phase information by 180 degrees to calculate fourth phase information (φ4);

third interpolation circuits (157, 158) that, for each of the previous symbol and the current symbol, correct an amplitude of said pilot carrier based on said third phase information, using said pilot carrier and subcarriers in front and behind thereof, and output the corrected amplitude as a third interpolation result;

fourth interpolation circuits (155, 156) that, for each of the previous symbol and the current symbol, correct an amplitude of said pilot carrier based on said forth phase information, using said pilot carrier and subcarriers in front and behind thereof, and output the corrected amplitude as a forth interpolation result;

a third differential demodulation circuit (114) that, for each of the previous symbol and the current symbol, differentially demodulates said third interpolation result output from said third interpolation circuit;

a third phase conversion circuit (124) that performs phase conversion of an output of said third differential demodulation circuit to acquire third phase information after interpolation;

a fourth differential demodulation circuit (113) that, for each of the previous symbol and the current symbol, differentially demodulates said fourth interpolation result output from said fourth interpolation circuit;

a fourth phase conversion circuit (123) that performs phase conversion of an output of said fourth differential demodulation circuit to acquire fourth phase information after interpolation;

a third phase variation detection circuit (164) that collects said third phase information and said third phase information after interpolation for one symbol period, measures a variation of said third phase information after interpolation with respect to said third phase information, and outputs third phase variation information; and

a fourth phase variation detection circuit (163) that collects said fourth phase information and said fourth phase information after interpolation for one symbol period, measures a variation of said fourth phase information after interpolation with respect to said fourth phase information, and outputs fourth phase variation information, wherein:

said variation comparison circuit receives said first to fourth phase variation information and performs a comparison;

among said first to fourth phase information, one having a minimum variation is detected as a phase error, and

wherein:

said third interpolation circuits and said forth interpolation circuits, each derive an interpolation coefficient corresponding to said third phase information and said forth phase information respectively for said pilot carrier and subcarriers in front and behind thereof from an inter-carrier interference curve determined in advance, multiply said pilot carrier and said subcarriers by the interpolation coefficient, and add multiplication results, thereby correcting an amplitude of said pilot carrier, and output the corrected amplitude as a third interpolation result and a forth interpolation result respectively.

3. The carrier frequency error detector according to claim 1, further comprising first and second memories (191, 192) connected in series for each holding all carrier data per symbol; and

wherein data on said pilot carrier and said subcarriers in front and behind thereof for the previous symbol and the current symbol is read from said first and second symbol memories.

4. The carrier frequency error detector according to claim 1, further comprising first and second memories (311, 312) connected in series for each holding data on a specific pilot carrier in said pilot carrier included in one symbol and subcarriers in front and behind thereof; and

wherein data on said specific pilot carrier and said subcarriers in front and behind thereof for the previous symbol and the current symbol is read from said first and second memories.

5. The carrier frequency error detector according to claim 1, wherein said Fourier transform is provided from a Fourier transform circuit in said demodulation device,

the carrier frequency error detector further comprising a memory (32) that holds data on a specific pilot carrier in said pilot carrier included in one symbol and subcarriers in front and behind thereof; and wherein:

data on said specific pilot carrier and said subcarriers in front and behind thereof for the previous symbol is read from said memory; and data on said specific pilot carrier and said subcarriers in front and behind thereof for the current symbol is read from said Fourier transform circuit in accordance with progress of a process with one symbol period divided into a plurality of time zones.

6. The carrier frequency error detector according to claim 1, wherein said Fourier transform is provided from a Fourier transform circuit in said demodulation device,

the carrier frequency error detector further comprising a memory (35) that holds data on a first specific pilot carrier and subcarriers in front and behind thereof, and a second specific pilot carrier in said pilot carrier included in one symbol, and wherein:

data on said first specific pilot carrier and said subcarriers in front and behind thereof, and said second specific pilot carrier for the previous symbol is read from said memory; and data on said first specific pilot carrier and said subcarriers in front and behind thereof, and said second specific pilot carrier for the current symbol is read from said Fourier transform circuit in accordance with progress of a process with one symbol period divided into a plurality of time zones;

calculation of phase information is performed using said first specific pilot carrier in a first time zone in said one symbol period;

an interpolation process and acquisition of phase variation information are performed using said first specific pilot carrier and said subcarriers in front and behind thereof in a second time zone in said one symbol period; and

in a third time zone in said one symbol period, a phase (θ) obtained by performing a differential demodulation in said differential demodulation circuit and phase conversion in said phase conversion circuit for said first and second specific pilot carriers and a phase (θx) after shifting obtained by shifting said phase by 180 degrees are compared with said phase information in a phase computing circuit (35) and one having a smaller difference is output as said phase error.

7. The carrier frequency error detector according to claim 4, wherein:

said first specific pilot carrier includes a TMCC pilot carrier; and said second specific pilot carrier includes an auxiliary channel pilot carrier.

**Patentansprüche**

1. Trägerfrequenz-Fehlerdetektor, der in einer Demodulationsvorrichtung zum Demodulieren eines OFDM-Signals enthalten ist, zum Detektieren eines Trägerfrequenz-Fehlers unter Verwendung eines differenziell modulierten Pilotträgers von Unterträgern, die durch Fourier-Transformation in ein Frequenz-Domänensignal umgewandelt sind, wobei der Trägerfrequenz-Fehlerdetektor umfasst:

eine Differenzial-Demodulationsschaltung (11), welche den Pilotträger differenziell demoduliert;
eine Phasenumwandlungsschaltung (12), die Phasenumwandlung einer Ausgabe der Differenzial-Demodulationsschaltung durchführt, um eine Phase θ1 nach der Modulation des Pilotträgers zu erfassen;
eine Phasendurchschnitts-Bildungsschaltung (13), die akkumulativ die Phase nach der Modulation in einem Symbol integriert, danach Division durch eine Anzahl von Piloten durchführt, um einen Phasendurchschnitt zu ermitteln, und den Phasendurchschnitt als erste Phaseninformation φ1 ausgibt;
eine Phasenverschiebungsschaltung (14), die die erste Phaseninformation empfängt und die erste Phaseninformation um 180° verschiebt, um eine zweite Phaseninformation φ2 zu berechnen;
erste Interpolationsschaltungen (153, 154), welche für sowohl das vorherige Symbol als auch das aktuelle Symbol eine Amplitude des Pilotträgers basierend auf der ersten Phaseninformation korrigieren, wobei der Pilotträger und Unterträger vor und hinter demselben verwendet werden, und die korrigierte Amplitude als ein erstes Interpolationsergebnis ausgeben;
zweite Interpolationsschaltungen (151, 152), welche für sowohl das vorherige Symbol als auch das aktuelle Symbol eine Amplitude des Pilotträgers basierend auf der zweiten _ Phaseninformation korrigieren, wobei der Pilotträger und Unterträger vor und hinter demselben verwendet werden, und die korrigierte Amplitude als ein zweites Interpolationsergebnis ausgeben;
eine erste Differenzial-Demodulationsschaltung (112), die für sowohl das vorherige Symbol als auch das aktuelle Symbol das erste Interpolationsergebnis, das aus der ersten Interpolationsschaltung ausgegeben ist, differenziell demoduliert;
eine erste Phasenumwandlungsschaltung (122), die eine Phase einer Ausgabe der ersten Differenzial-Demodulationsschaltung umwandelt, um erste Phaseninformation nach Interpolation zu erhalten;
eine zweite Differenzial-Demodulationsschaltung (111), die für sowohl das vorherige Symbol als auch das aktuelle Symbol das zweite Interpolationsergebnis, das aus der zweiten Interpolationsschaltung ausgegeben ist, differenziell demoduliert;
eine zweite Phasenumwandlungsschaltung (121), die eine Phase einer Ausgabe der zweiten Differenzial-Demodulationsschaltung umwandelt, um zweite Phaseninformation nach Interpolation zu erhalten;
eine erste Phasenvariations-Detektionsschaltung (162), welche die erste Phaseninformation und die erste Phaseninformation nach Interpolation für eine Symbolperiode sammelt, eine Variation der ersten Phaseninformation nach Interpolation in Bezug auf die erste Phaseninformation misst, und die erste Phasenvariationsinformation ausgibt;
eine zweite Phasenvariations-Detektionsschaltung (162), welche die zweite Phaseninformation und die zweite Phaseninformation nach Interpolation für eine Symbolperiode sammelt, eine Variation der zweiten Phaseninformation nach Interpolation in Bezug auf die zweite Phaseninformation misst, und die zweite Phasenvariationsinformation ausgibt, und;

eine Variations-Vergleichsschaltung (17), welche die erste und zweite Phasenvariationsinformation empfängt und vergleicht,

wobei eine mit einer kleineren Variation der ersten und zweiten Phaseninformation als ein Phasenfehler detektiert wird, und

wobei:

die ersten Interpolationsschaltungen und die zweiten Interpolationsschaltungen alle einen Interpolations-Koeffizienten ableiten, welcher der ersten Phaseninformation bzw. der zweiten Phaseninformation für den Pilotträger und Unterträger vor und hinter demselben aus einer vorab bestimmten Zwischenträger-Interferenzkurve entspricht, den Pilotträger und die Unterträger mit dem Interpolations-Koeffizienten multiplizieren, und Multiplikationsergebnisse addieren, wodurch eine Amplitude des Pilotträgers korrigiert wird, und die korrigierte Amplitude als ein erstes Interpolationsergebnis bzw. ein zweites Interpolationsergebnis ausgeben.

2.  Trägerfrequenz-Fehlerdetektor gemäß Anspruch 1, weiter umfassend:

eine Phasenumwandlungsschaltung (20), welche die aus der Phasenumwandlungsschaltung nach Demodulation, ausgegebene Phase empfängt, und wenn die Phase nach Demodulation jenseits $\pm\pi/2$ ist, $\pm\pi$ addiert und subtrahiert, um eine Umwandlung in eine Phase innerhalb $\pm\pi/2$ durchzuführen und die Phase als eine Phase ($\theta3$) nach Umwandlung ausgibt;
eine erste Phasendurchschnitts-Bildungsschaltung (131), welche die Phase nach Umwandlung empfängt, akkumulativ die Phase nach Umwandlung in ein Symbol integriert, danach eine Division durch eine Anzahl von Piloten durchführt, um einen Phasendurchschnitt zu ermitteln, und den Phasendurchschnitt als dritte Phaseninformation ($\phi3$) ausgibt;
eine erste Phasenverschiebungsschaltung (141), welche die dritte Phaseninformation empfängt und die dritte Phaseninformation um 180° verschiebt, um eine vierte Phaseninformation ($\phi4$) zu berechnen;
dritte Interpolationsschaltungen (157, 158), die sowohl für das vorherige Symbol als auch das aktuelle Symbol eine Amplitude des Pilotträgers korrigieren, basierend auf der dritten Phaseninformation, wobei der Pilotträger und Unterträger vor und hinter demselben verwendet werden, und die korrigierte Amplitude als ein drittes Interpolationsergebnis ausgibt;
vierte Interpolationsschaltungen (155, 156), die für sowohl das vorherige Symbols als auch das aktuelle Symbol eine Amplitude des Pilotträgers korrigiert, basierend auf der vierten Phaseninformation, wobei der Pilotträger und Unterträger vor und hinter demselben verwendet werden, und die korrigierte Amplitude als ein viertes Interpolationsergebnis ausgibt;
eine dritte Differenzial-Demodulationsschaltung (114), die sowohl für das vorherige Symbol als auch das aktuelle Symbol das aus der dritten Interpolationsschaltung ausgegebene dritte Interpolationsergebnis differenziell demoduliert;
eine dritte Phasenumwandlungsschaltung (124), die Phasenumwandlung einer Ausgabe der dritten Differenzial-Demodulationsschaltung durchführt, um dritte Phaseninformation nach Interpolation zu ermitteln;
eine vierte Differenzial-Demodulationsschaltung (113), die sowohl für das vorherige Symbol als auch das aktuelle Symbol das aus der dritten Interpolationsschaltung ausgegebene vierte Interpolationsergebnis differenziell demoduliert;
eine vierte Phasenumwandlungsschaltung (123), die Phasenumwandlung einer Ausgabe der vierten Differenzial-Demodulationsschaltung durchführt, um vierte Phaseninformation nach Interpolation zu ermitteln;
eine dritte Phasenvariations-Detektionsschaltung (164), welche die dritte Phaseninformation und die dritte Phaseninformation nach Interpolation für eine Symbolperiode lang sammelt, eine Variation der dritten Phaseninformation nach Interpolation in Bezug auf die dritte Phaseninformation sammelt und dritte Phasenvariationsinformation ausgibt; und
eine vierte Phasenvariations-Detektionsschaltung (163), welche die vierte Phaseninformation und die vierte Phaseninformation nach Interpolation für eine Symbolperiode lang sammelt, eine Variation der vierten Phaseninformation nach Interpolation in Bezug auf die vierte Phaseninformation sammelt und vierte Phasenvariationsinformation ausgibt, wobei:

die Variations-Vergleichsschaltung die ersten bis vierten Phasenvariations-Informationen empfängt und einen Vergleich durchführt;
aus den ersten bis vierten Phaseninformationen eine mit einer minimalen Variation als ein Phasenfehler detektiert wird, und

wobei:

die dritten Interpolationsschaltungen und die vierten Interpolationsschaltungen alle einen Interpolations-Koeffizienten entsprechend der dritten Phaseninformation bzw.

der vierten Phaseninformation für den Pilotträger und Unterträger vor und hinter demselben aus einer vorab bestimmten Zwischenträger-Interferenzkurve ableiten, den Pilotträger und die Unterträger mit dem Interpolations-Koeffizienten multiplizieren und Multiplikationsergebnisse addieren, wodurch eine Amplitude des Pilotträgers korrigiert wird, und die korrigierte Amplitude als ein drittes Interpolationsergebnis bzw. ein viertes Interpolationsergebnis ausgeben.

3. Trägerfrequenz-Fehlerdetektor gemäß Anspruch 1, weiter umfassend erste und zweite Speicher (191, 192), die in Reihe verbunden sind, jedes zum Halten aller Trägerdaten pro Symbol; und
wobei Daten über den Pilotträger und die Unterträger vor und hinter demselben für das vorherige Symbol und das aktuelle Symbol aus den ersten und zweiten Symbolspeichern ausgelesen werden.

4. Trägerfrequenz-Fehlerdetektor gemäß Anspruch 1, weiter umfassend erste und zweite Speicher (311, 312), die in Reihe verbunden sind, beide zum Halten von Daten über einen spezifischen Pilotträger in dem in einem Symbol enthaltenen Pilotträger und Unterträgern vor und hinter demselben; und wobei Daten über den spezifischen Pilotträger und die Unterträger vor und hinter demselben für das vorherige Symbol und das aktuelle Symbol aus den ersten und zweiten Speichern ausgelesen werden.

5. Trägerfrequenz-Fehlerdetektor gemäß Anspruch 1, wobei die Fourier-Transformation aus einer Fourier-Transformationsschaltung in der Demodulationsvorrichtung bereitgestellt ist,
der Trägerfrequenz-Fehlerdetektor weiter einen Speicher (32) umfasst, der Daten über einen spezifischen Pilotträger in dem, in einem Symbol enthaltenen Pilotträger und Unterträgern vor und hinter demselben hält, und wobei:

Daten über den spezifischen Pilotträger und die Unterträger vor und hinter demselben für das vorherige Symbol aus dem Speicher ausgelesen werden; und
Daten über den spezifischen Pilotträger und die Unterträger vor und hinter demselben für das aktuelle Symbol aus der Fourier-Transformationsschaltung in Übereinstimmung mit dem Fortschreiten eines Prozesses bei einer Symbolperiode, die in einer Mehrzahl von Zeitzonen unterteilt ist, ausgelesen werden.

6. Trägerfrequenz-Fehlerdetektor gemäß Anspruch 1, wobei die Fourier-Transformation von einer Fourier-Transformationsschaltung in der Demodulationsvorrichtung bereitgestellt ist,
wobei der Trägerfrequenz-Fehlerdetektor weiter einen Speicher (35) umfasst, der Daten über einen ersten spezifischen Pilotträger und Unterträger vor und hinter demselben hält, und einen zweiten spezifischen Pilotträger in dem, in einem Symbol enthaltenen Pilotträger, und wobei:

Daten über den ersten spezifischen Pilotträger und die Unterträger vor und hinter demselben und den zweiten spezifischen Pilotträger für das vorherige Symbol aus dem Speicher ausgelesen werden; und
Daten über den ersten spezifischen Pilotträger und die Unterträger vor und hinter demselben und den zweiten spezifischen Pilotträger für das aktuelle Symbol aus der Fourier-Transformationsschaltung entsprechend dem Fortschreiten eines Prozesses bei einer in eine Mehrzahl von Zeitzonen unterteilten Symbolperiode ausgelesen werden;
die Berechnung von Phaseninformation unter Verwendung des ersten spezifischen Pilotträgers in einer ersten Zeitzone in der besagten einen Symbolperiode durchgeführt wird;
ein Interpolationsprozess und Erfassung von Phasenvariationsinformation unter Verwendung des ersten spezifischen Pilotträgers und der Unterträger vor und hinter demselben in einer zweiten Zeitzone in der einen Symbolperiode durchgeführt werden; und
in einer dritten Zeitzone in der einen Symbolperiode eine Phase (θ), welche durch Durchführen einer differenziellen Demodulation in der Differential-Demodulationsschaltung und Phasenumwandlung in der Phasenumwandlungsschaltung für die ersten und zweiten spezifischen Pilotträger ermittelt wird, und eine Phase (θx) nach Verschiebung, die durch Verschieben der Phase um 180° ermittelt wird, mit der Phaseninformation in einer Phasenrechenschaltung (35) verglichen werden und eine mit einer kleineren Differenz als der Phasenfehler ausgegeben wird.

7. Trägerfrequenz-Fehlerdetektor gemäß Anspruch 4, wobei:

der erste spezifische Pilotträger einen TMCC-Pilotträger enthält und der zweite spezifische Pilotträger einen Hilfskanal-Pilotträger enthält.

**Revendications**

1. Détecteur d'erreur de fréquence de porteuse, compris dans un dispositif de démodulation pour démoduler un signal OFDM, pour détecter une erreur de fréquence de porteuse en utilisant une porteuse pilote à modulation différentielle entre des sous-porteuses qui sont converties à un signal de domaine de fréquence par transformation de Fourier, le détecteur d'erreur de fréquence de porteuse comprenant :

un circuit de démodulation différentielle (11) qui démodule de manière différentielle ladite porteuse pilote ;

un circuit de conversion de phase (12) qui effectue une conversion de phase d'une sortie dudit circuit de démodulation différentielle pour acquérir une phase $\theta 1$ après démodulation de ladite porteuse pilote ;

un circuit de mise en moyenne de phase (13) qui intègre de manière cumulée ladite phase après démodulation dans un symbole, effectue ensuite une division par le nombre de pilotes pour acquérir une moyenne de phase, et délivre la moyenne de phase comme premières informations de phase $\phi 1$ ;

un circuit de décalage de phase (14) qui reçoit lesdites premières informations de phase, et décale lesdites premières informations de phase de 180 degrés pour calculer des secondes informations de phase $\phi 2$ ;

des premiers circuits d'interpolation (153, 154) qui, pour chacun du symbole précédent et du symbole courant, corrigent une amplitude de ladite porteuse pilote sur la base desdites premières informations de phase, en utilisant ladite porteuse pilote et des sous-porteuses qui se trouvent devant et derrière celle-ci, et délivrent l'amplitude corrigée comme premier résultat d'interpolation ;

des deuxièmes circuits d'interpolation (151, 152) qui, pour chacun du symbole précédent et du symbole courant, corrigent une amplitude de ladite porteuse pilote sur la base desdites deuxièmes informations de phase en utilisant ladite porteuse pilote et les sous-porteuses qui se trouvent devant et derrière celle-ci et délivrent l'amplitude corrigée comme deuxième résultat d'interpolation ;

un premier circuit de démodulation différentielle (112) qui, pour chacun du symbole précédent et du symbole courant, démodule de manière différentielle ledit premier résultat d'interpolation délivré par ledit premier circuit d'interpolation ;

un premier circuit de conversion de phase (122) qui convertit une phase d'une sortie dudit premier circuit de démodulation différentielle pour acquérir des premières informations de phase après interpolation ;

un deuxième circuit de démodulation différentielle (111) qui, pour chacun du symbole précédent et du symbole courant, démodule de manière différentielle ledit deuxième résultat d'interpolation délivré par ledit deuxième circuit d'interpolation ;

un deuxième circuit de conversion de phase (121) qui convertit une phase d'une sortie dudit deuxième circuit de démodulation différentielle pour acquérir des deuxièmes informations de phase après interpolation ;

un premier circuit de détection de variation de phase (162) qui recueille lesdites premières informations de phase et lesdites premières informations de phase après interpolation pour une période d'un symbole, mesure une variation desdites premières informations de phase après interpolation par rapport auxdites premières de phase, et délivre des premières informations de variation de phase ;

un deuxième circuit de détection de variation de phase (161) qui recueille lesdites deuxièmes informations de phase et lesdites deuxièmes informations de phase après interpolation pour une période d'un symbole, mesure une variation desdites deuxièmes informations de phase après interpolation par rapport auxdites deuxièmes informations de phase et délivre des deuxièmes informations de variation de phase ; et

un circuit de comparaison de variation (17) qui reçoit et compare lesdites premières et deuxièmes informations de variation de phase, dans lequel celles ayant une moindre variation desdites premières et deuxièmes informations de phase sont détectées comme erreur de phase, et

dans lequel :

lesdits premiers circuits d'interpolation et lesdits deuxièmes circuits d'interpolation retirent chacun un coefficient d'interpolation correspondant auxdites premières informations de phase et auxdites deuxièmes informations de phase, respectivement, pour ladite porteuse pilote et les sous-porteuses qui se trouvent devant et derrière celle-ci d'une courbe d'interférence entre porteuses déterminée à l'avance, multiplient ladite porteuse pilote et lesdites sous-porteuses par le coefficient d'interpolation, et ajoutent les résultats de la multiplication, corrigeant de la sorte l'amplitude de ladite porteuse pilote, et délivrent l'amplitude corrigée comme premier résultat d'interpolation et deuxième résultat d'interpolation, respectivement.

2. Détecteur d'erreur de fréquence de porteuse selon la revendication 1, comprenant en outre :

un circuit de conversion de phase (20) qui reçoit ladite phase après démodulation délivrée par ledit circuit de conversion de phase, et lorsque ladite phase après démodulation se situe au-delà de $\pm\,\pi/2$, ajoute et soustrait $\pm\,\pi$ pour effectuer une conversion dans une phase qui se situe dans le cadre de $\pm\,\pi/2$, et délivre la phase comme phase ($\theta3$) après conversion ;

un premier circuit de mise en moyenne de phase (131) qui reçoit ladite phase après conversion, intègre de manière cumulée ladite phase après conversion en un symbole, effectue ensuite une division par un nombre de pilotes pour acquérir une moyenne de phase, et délivre la moyenne de phase comme troisièmes informations de phase ($\phi3$) ;

un premier circuit de décalage de phase (141) qui reçoit lesdites troisièmes informations de phase, et décale lesdites troisièmes informations de phase de 180 degrés pour calculer des quatrièmes informations de phase ($\phi4$) ;

des troisièmes circuits d'interpolation (157, 158) qui, pour chacun du symbole précédent et du symbole courant, corrigent une amplitude de ladite porteuse pilote sur la base desdites troisièmes informations de phase, en utilisant ladite porteuse pilote et des sous-porteuses qui se trouvent devant et derrière celle-ci, et délivrent l'amplitude corrigée comme troisième résultat d'interpolation ;

des quatrièmes circuits d'interpolation (155, 156) qui, pour chacun du symbole précédent et du symbole courant, corrigent une amplitude de ladite porteuse pilote sur la base desdites quatrièmes informations de phase, en utilisant ladite porteuse pilote et des sous-porteuses qui se trouvent devant et derrière celle-ci, et délivrent l'amplitude corrigée comme quatrième résultat d'interpolation ;

un troisième circuit de démodulation différentielle (114) qui, pour chacun du symbole précédent et du symbole courant, démodule de manière différentielle ledit troisième résultat d'interpolation délivré par ledit troisième circuit d'interpolation ;

un troisième circuit de conversion de phase (124) qui effectue une conversion de phase d'une sortie dudit troisième circuit de démodulation différentielle pour acquérir des troisièmes informations de phase après interpolation ;

un quatrième circuit de démodulation différentiel (113) qui, pour chacun du symbole précédent et du symbole courant, démodule de manière différentielle ledit quatrième résultat d'interpolation délivré par ledit quatrième circuit d'interpolation ;

un quatrième circuit de conversion de phase (123) qui effectue une conversion de phase d'une sortie dudit quatrième circuit de démodulation différentielle pour acquérir des quatrièmes informations de phase après interpolation ;

un troisième circuit de détection de variation de phase (164) qui recueille lesdites troisièmes informations de phase et lesdites troisièmes informations de phase après interpolation pour une période d'un symbole, mesure une variation desdites troisièmes informations de phase après interpolation par rapport auxdites troisièmes informations de phase, et délivre des troisièmes informations de variation de phase ; et

un quatrième circuit de détection de variation de phase (163) qui recueille lesdites quatrièmes informations de phase et lesdites quatrièmes informations de phase après interpolation pour une période d'un symbole, mesure une variation desdites quatrièmes informations de phase après interpolation par rapport auxdites quatrièmes informations de phase, et délivre des quatrièmes informations de variation de phase, dans lequel :

> ledit circuit de comparaison de variation reçoit lesdites premières à quatrièmes informations de variation de phase et effectue une comparaison ;
>
> entre lesdites premières à quatrièmes informations de phase, celles ayant une variation minimale sont détectées comme erreur de phase, et

dans lequel :

> lesdits troisièmes circuits d'interpolation et lesdits quatrièmes circuits d'interpolation retirent chacun un coefficient d'interpolation correspondant auxdites troisièmes informations de phase et auxdites quatrièmes informations de phase, respectivement, pour ladite porteuse pilote et des sous-porteuses qui se trouvent devant et derrière celle-ci d'une courbe d'interférence entre porteuses déterminée à l'avance, multiplient ladite porteuse pilote et lesdites sous-porteuses par le coefficient d'interpolation, et ajoutent les résultats de la multiplication, corrigeant de la sorte l'amplitude de ladite porteuse pilote, et délivrent l'amplitude corrigée comme troisième résultat d'interpolation et comme quatrième résultat d'interpolation, respectivement.

**3.** Détecteur d'erreur de fréquence de porteuse selon la revendication 1, comprenant en outre une première et une deuxième mémoire (191, 192) connectées en série pour que chacune conserve toutes les données des porteuses par symbole ; et

dans lequel les données sur ladite porteuse pilote et lesdites sous-porteuses qui se trouvent devant et derrière celle-ci pour le symbole précédent et le symbole courant sont lues dans lesdites première et seconde mémoires de symbole.

4. Détecteur d'erreur de fréquence de porteuse selon la revendication 1, comprenant en outre une première et une seconde mémoire (311, 312) connectées en série pour que chacune conserve des données sur une porteuse pilote spécifique dans ladite porteuse spécifique comprise dans un symbole et des sous-porteuses qui se trouvent devant et derrière celle-ci ; et

dans lequel les données sur ladite porteuse pilote spécifique et lesdites sous-porteuses qui se trouvent devant et derrière celle-ci pour le symbole précédent et le symbole courant sont lues dans lesdites premières et secondes mémoires.

5. Détecteur d'erreur de fréquence de porteuse selon la revendication 1, dans lequel ladite transformation de Fourier est réalisée à partir d'un circuit de transformation de Fourier dans ledit dispositif de démodulation,

le détecteur d'erreur de fréquence de porteuse comprenant en outre une mémoire (32) qui conserve des données sur une porteuse pilote spécifique dans ladite porteuse pilote comprise dans un symbole et des sous-porteuses qui se trouvent devant et derrière celle-ci ; et dans lequel :

les données sur ladite porteuse pilote spécifique et lesdites sous-porteuses qui se trouvent devant et derrière celle-ci pour le symbole précédent sont lues dans ladite mémoire ; et
les données sur ladite porteuse pilote spécifique et lesdites sous-porteuses qui se trouvent devant et derrière celle-ci pour le symbole courant sont lues dans ledit circuit de transformation de Fourier selon la progression d'un processus avec une période d'un symbole divisée en une pluralité de zones temporelles.

6. Détecteur d'erreur de fréquence de porteuse selon la revendication 1, dans lequel ladite transformation de Fourier est fournie par un circuit de transformation de Fourier dans ledit dispositif de démodulation,

le détecteur d'erreur de fréquence de porteuse comprenant en outre une mémoire (35) qui conserve des données sur une première porteuse pilote spécifique et des sous-porteuses qui se trouvent devant et derrière celle-ci, et une deuxième porteuse pilote spécifique dans ladite porteuse pilote comprise dans un symbole, et dans lequel :

les données sur ladite première porteuse pilote spécifique et lesdites sous-porteuses qui se trouvent devant et derrière celle-ci, et ladite seconde porteuse pilote spécifique pour le symbole précédent sont lues dans ladites mémoire ; et

les données sur ladite première porteuse pilote spécifique et lesdites sous-porteuses qui se trouvent devant et derrière celle-ci, et ladite seconde porteuse pilote spécifique pour le symbole courant sont lues dans ledit circuit de transformation de Fourier conformément à la progression d'un processus avec une période d'un symbole divisée en une pluralité de zones temporelles ;

le calcul d'informations de phase est réalisé en utilisant ladite première porteuse pilote spécifique dans une première zone temporelle dans ladite période d'un symbole ;

un processus d'interpolation et une acquisition d'informations de variation de phase sont réalisés en utilisant ladite première porteuse pilote spécifique et lesdites sous-porteuses qui se trouvent devant et derrière celle-ci dans une deuxième zone temporelle dans ladite période d'un symbole ; et

dans une troisième zone temporelle dans ladite période d'un symbole, une phase (θ) obtenue en effectuant une démodulation différentielle dans ledit circuit de démodulation différentiel et une conversion de phase dans ledit circuit de conversion de phase pour lesdites première et seconde porteuses pilotes spécifiques et une phase (θx) après décalage obtenu en décalant ladite phase de 180 degrés sont comparées auxdites informations de phase dans un circuit de calcul de phase (35), et celle ayant une plus petite différence est délivrée comme ladite erreur de phase.

7. Détecteur d'erreur de fréquence de porteuse selon la revendication 4, dans lequel :

ladite première porteuse pilote spécifique comprend une porteuse pilote TMCC ; et ladite seconde porteuse pilote spécifique comprend une porteuse pilote à canal auxiliaire.

F I G . 1

101          102          103          104

| RF/IF CONVERTER (TUNER) | DIGITAL DEMODULATOR | AUDIO-VISUAL DECODER | MONITOR |

F I G . 2

| COMPLEX MULTIPLIER | FOURIER TRANSFORM CIRCUIT | CARRIER FREQUENCY ERROR CORRECTION CIRCUIT |

1          2          6

| NUMERICALLY CONTROLLED OSCILLATOR | LOOP FILTER | CARRIER FREQUENCY ERROR DETECTOR |

5          4          3 (3A, 3B, 3C, 3D)

F I G . 3

F I G . 4

F I G . 5

F I G . 6

F I G . 7

```
                          ┌─────────┐
                          │  START  │
                          └────┬────┘
                               │
                               ▼
                    ┌──────────────────────┐
                    │   DIFFERENTIALLY      │
                    │  DEMODULATE PILOT     ├──── S1
                    │      CARRIER          │
                    └──────────┬───────────┘
                               │
                               ▼
                    ┌──────────────────────┐
                    │   PHASE CONVERSION    ├──── S2
                    └──────────┬───────────┘
                               │
                               ▼
                    ┌──────────────────────┐
                    │    PHASE AVERAGE      ├──── S3
                    └──────────┬───────────┘
                               │
            ┌──────────────────┴──────────────────┐
            │                                      ▼
            │                          ┌──────────────────────┐
            │                          │       π − θ          ├──── S4
            │                          └──────────┬───────────┘
            │                                      │
    ┌───────┼──────────────┐          ┌───────────┼──────────────┐
    │       ▼         S9    │          │           ▼         S5   │
    │ ┌──────────────────────┐ │        │ ┌──────────────────────┐ │
    │ │ INTERPOLATE CURRENT  │ │        │ │ INTERPOLATE CURRENT  │ │
    │ │ SYMBOL, INTERPOLATE  │ │        │ │ SYMBOL, INTERPOLATE  │ │
    │ │   PREVIOUS SYMBOL    │ │        │ │   PREVIOUS SYMBOL    │ │
    │ └──────────┬───────────┘ │        │ └──────────┬───────────┘ │
    │            ▼       S10    │        │            ▼      S6     │
    │ ┌──────────────────────┐ │        │ ┌──────────────────────┐ │
    │ │   DIFFERENTIALLY     │ │        │ │   DIFFERENTIALLY     │ │
    │ │ DEMODULATE PILOT     │ │        │ │ DEMODULATE PILOT     │ │
    │ │     CARRIER          │ │        │ │     CARRIER          │ │
    │ └──────────┬───────────┘ │        │ └──────────┬───────────┘ │
    │            ▼       S11    │        │            ▼      S7     │
    │ ┌──────────────────────┐ │        │ ┌──────────────────────┐ │
    │ │  PHASE CONVERSION    │ │        │ │  PHASE CONVERSION    │ │
    │ └──────────┬───────────┘ │        │ └──────────┬───────────┘ │
    │            ▼       S12    │        │            ▼      S8     │
    ▼──────────────────────────┐       ▼──────────────────────────┐
    │ MEASURE PHASE VARIATION  │       │ MEASURE PHASE VARIATION  │
    └────────────┬─────────────┘       └────────────┬─────────────┘
                 │                                   │
                 ▼                                   ▼
            ┌──────────────────────────────────────────┐
            │         DETERMINE VARIATION              ├──── S13
            └────────────────────┬─────────────────────┘
                                 ▼
                    ┌──────────────────────┐
                    │    OUTPUT ERROR      ├──── S14
                    └──────────────────────┘
```

26

F I G . 8

151（152〜154）

φ1（φ2，φ3，φ4）

F I G . 9

F I G . 1 0

F I G . 1 1

F I G . 1 2

F I G . 1 3

F I G . 1 4

F I G . 1 5

φ2(φ1)

161(162)

(a)

DIFFERENCE CIRCUIT — 21 → SQUARE CIRCUIT — 22 → SYMBOL ACCUMULATION CIRCUIT — 23

φ2(φ1)

(b)

DIFFERENCE CIRCUIT — 24 → ABSOLUTE VALUE CIRCUIT — 25 → SYMBOL ACCUMULATION CIRCUIT — 26

F I G . 1 6

FIG. 17

EP 2 134 048 B1

F I G . 1 8

F I G . 1 9

F I G . 2 0

## F I G . 2 1

```
                          ┌─────────┐
                          │  START  │
                          └─────────┘
                               │
                               ▼  ╭S1
                        ┌──────────────┐
                        │ DIFFERENTIALLY│
                        │  DEMODULATE   │
                        │ PILOT CARRIER │
                        └──────────────┘
                               │
                               ▼  ╭S2                    ╭S15
                        ┌──────────────┐         ┌──────────────────┐
                        │    PHASE     │────────▶│  PHASE RETURNING │────────┐
                        │  CONVERSION  │         └──────────────────┘        │
                        └──────────────┘                                     │
                               │  ╭S3                                        ▼  ╭S16
                    ┌──────────────────────┐                    ┌──────────────────────┐
                    │  PHASE AVERAGE (θ1)  │                    │  PHASE AVERAGE (θ3)  │
                    └──────────────────────┘                    └──────────────────────┘
                        │               │  ╭S4                      │               │  ╭S17
                        │          ┌─────────┐                      │          ┌─────────┐
                        │          │  π − θ  │                      │          │  π − θ  │
                        │          └─────────┘                      │          └─────────┘
```

| ╭S9 | ╭S5 | ╭S22 | ╭S18 |
|---|---|---|---|
| INTERPOLATE CURRENT SYMBOL, INTERPOLATE PREVIOUS SYMBOL | INTERPOLATE CURRENT SYMBOL, INTERPOLATE PREVIOUS SYMBOL | INTERPOLATE CURRENT SYMBOL, INTERPOLATE PREVIOUS SYMBOL | INTERPOLATE CURRENT SYMBOL, INTERPOLATE PREVIOUS SYMBOL |
| ╭S10 | ╭S6 | ╭S23 | ╭S19 |
| DIFFERENTIALLY DEMODULATE PILOT CARRIER | DIFFERENTIALLY DEMODULATE PILOT CARRIER | DIFFERENTIALLY DEMODULATE PILOT CARRIER | DIFFERENTIALLY DEMODULATE PILOT CARRIER |
| ╭S11 | ╭S7 | ╭S24 | ╭S20 |
| PHASE CONVERSION | PHASE CONVERSION | PHASE CONVERSION | PHASE CONVERSION |
| ╭S12 | ╭S8 | ╭S25 | ╭S21 |
| MEASURE PHASE VARIATION | MEASURE PHASE VARIATION | MEASURE PHASE VARIATION | MEASURE PHASE VARIATION |

```
                               ╭S13
              ┌────────────────────────────────────────────────┐
              │              DETERMINE VARIATION                │
              └────────────────────────────────────────────────┘
                               │  ╭S14
                        ┌──────────────┐
                        │ OUTPUT ERROR │
                        └──────────────┘
```

F I G . 2 2

3B

# FIG. 23

F I G . 2 4

| | |
|---|---|
| ◄─────────────── ONE SYMBOL PERIOD ───────────────► | |
| FIRST READING OF CURRENT SYMBOL | SECOND READING OF CURRENT SYMBOL |

DIFFERENTIAL DEMODULATION
PHASE CONVERSION
PHASE AVERAGING

INTERPOLATION
DIFFERENTIAL DEMODULATION
PHASE CONVERSION
VARIATION DETECTION

# FIG. 25

FIG. 26

| | ONE SYMBOL PERIOD | | |
|---|---|---|---|
| FOURIER TRANSFORM OUTPUT | DATA OF N SYMBOL | DATA OF N SYMBOL | DATA OF N SYMBOL |
| MEMORY OUTPUT | (pulses) TMCC DATA OF N-1 SYMBOL | (pulses) TMCC DATA OF N-1 SYMBOL AND N CARRIERS IN VICINITY OF TMCC | (pulses) TMCC DATA OF N-1 SYMBOL AND AC DATA OF N-1 SYMBOL |
| MEMORY WRITING | | (pulses) TMCC DATA OF N SYMBOL AND N CARRIERS IN VICINITY OF TMCC | (pulses) TMCC DATA OF N SYMBOL AND AC DATA OF N SYMBOL |
| PROCESSING | DEMODULATION OF TMCC DATA OF N SYMBOL, DETERMINATION OF $\phi1, \phi2, \phi3$ AND $\phi4$ | INTERPOLATION, DIFFERENTIAL DEMODULATION AND PHASE VARIATION DETECTION OF TMCC OF N SYMBOL AND N CARRIERS IN VICINITY | COMPUTING OF PHASE ERROR FROM TMCC AND AC CARRIER OF N SYMBOL |

F I G . 2 7

EP 2 134 048 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9321733 A
- JP H11112460 B
- JP 2004304454 A
- JP 3773388 B
- JP 2002064457 A